# EUROPÄISCHE PATENTSCHRIFT

(11) **EP 4 296 625 B1**
(45) Veröffentlichungstag und Bekanntmachung des Hinweises auf die Patenterteilung: **07.10.2026**
(21) Anmeldenummer: 23169270.8
(22) Anmeldetag: 21.04.2023
(51) Int. Cl.: G01D 21/00, G01D 21/02

(54) **VERFAHREN ZUR MESSUNG EINER MESSGRÖSSE BEI EINEM PROZESSSCHRITT EINES HERSTELLPROZESSES UND SYSTEM ZUR DURCHFÜHRUNG DES VERFAHRENS**
PROCEDURE FOR MEASURING A VARIABLE IN A PROCESS STEP OF A MANUFACTURING PROCESS AND SYSTEM FOR CARRYING OUT SAID PROCEDURE
PROCÉDÉ DE MESURE D'UNE GRANDEUR DE MESURE LORS D'UNE ÉTAPE DE PROCESSUS D'UN PROCESSUS DE FABRICATION SYSTEME DESTINÉE À LA MISE EN OEUVRE DU PROCÉDÉ

(30) Priorität: 20.06.2022 EP 22179915
(43) Veröffentlichungstag der Anmeldung: 27.12.2023
(73) Patentinhaber: Kistler Holding AG, 8408 Winterthur (CH)
(72) Erfinder: Keitzel, Gunnar, 8442 Hettlingen (CH); Heinemann, Michael, 71638 Ludwigsburg (DE); Tepsic, Stanko, 73614 Schorndorf (DE)

(56) Entgegenhaltungen:
- EP-A1- 1 323 495
- WO-A1-2016/116804
- US-A1- 2008 195 244

## Beschreibung

### Technisches Gebiet

Die Erfindung betrifft Verfahren zur Messung einer Messgrösse bei einem Prozessschritt eines Herstellprozesses, welcher Herstellprozess mit einer Werkzeugmaschine durchgeführt wird, unter Verwendung einer Messkette mit mehreren Messeinheiten und einer Auswerteeinheit. Die Erfindung betrifft auch Systeme zur Durchführung der Verfahren.

### Stand der Technik

Typischerweise wird bei einem Herstellprozess ein Werkstück mit einem Werkzeug bearbeitet. Dabei wirkt eine Messgrösse wie eine Kraft, ein Drehmoment, ein Biegemoment, eine Beschleunigung, eine Vibration, usw. auf das Werkzeug. Zur Kontrolle des Herstellprozesses ist es wünschenswert, die Messgrösse zu kennen. Dazu wird eine Messkette mit mehreren Übertragungsgliedern wie einem Sensor, einer Signalleitung und einer Auswerteeinheit verwendet. Unter der Wirkung der Messgrösse erzeugt der Sensor Messsignale, welche über die Signalleitung zur Auswerteeinheit abgeleitet werden. Für eine genaue Messung der Messgrösse ist es vorteilhaft, den Sensor möglichst nahe am Werkzeug anzubringen, wo die Messgrösse unverfälscht auftritt.

Solch eine Messkette ist aus der Schrift EP1323495A1 bekannt. Einem rotierenden Werkzeug ist eine Sensoreinrichtung zugeordnet, welche Sensoreinrichtung einen Sensor, einen AD Wandler und eine Spulenwicklung umfasst. Der Sensor erfasst eine am rotierenden Werkzeug wirkende Messgrösse und erzeugt für die erfasste Messgrösse Messsignale. Der AD Wandler digitalisiert die Messsignale in Messdaten. Jeder Sensoreinrichtung ist eine ortsfeste Spule zugeordnet. Die Spulenwicklung sendet die Messdaten mittels Nahfeldtelemetrie an die ortsfeste Spule. Dazu sind die Spulenwicklung und die ortsfeste Spule in einem Abstand von wenigen Millimetern voneinander angeordnet. Die ortsfeste Spule versorgt die Sensoreinrichtung zudem auch mit elektrischer Energie. Somit benötigt die Sensoreinrichtung keinen eigenen Energiespeicher. Die ortsfeste Spule ist mit einem Hauptverstärker verbunden. Der Hauptverstärker wertet die Messdaten aus.

Nun lehrt die Schrift EP1323495A1 die Verwendung eines Dehnungsmessstreifens als Sensor. Im Vergleich mit einem piezoelektrischen Sensor weist der Dehnungsmessstreifen bei der Präzisionsbearbeitung eines Werkstücks den Nachteil eines begrenzten Messbereichs und einer geringen dynamischen Messauflösung auf. Für eine optimale Auflösung der Messsignale muss bei einem Dehnungsmessstreifen der Messbereich bei sich verändernder Grösse der Messsignale öfters nachgestellt werden, was mit Aufwand verbunden ist. Und gerade bei Werkstücken, welche rasch rotieren, ist eine hohe dynamische Messauflösung mit einer Messfrequenz von bis zu 35kHz erwünscht.

Deshalb ist aus der Schrift WO2015176189A1 ein bewegtes System bekannt, bei dem eine Messeinheit einen piezoelektrischen Sensor, eine elektronische Einheit und eine bewegte Antenne aufweist. Die elektronische Einheit konditioniert und/oder komprimiert Messsignale des piezoelektrischen Sensors zu Messdaten. Die bewegte Antenne sendet die Messdaten mittels Fernfeldtelemetrie an eine ortsfeste Antenne. Durch die Verwendung von Fernfeldtelemetrie lassen sich die beiden Antennen in einem Abstand von mehreren Metern voneinander anordnen. Für eine störungsfreie Sendung der Messdaten ist die eine der beiden Antennen zirkular polarisiert, während die andere der beiden Antennen linear polarisiert ist. Die ortsfeste Antenne ist mit einer Datenverarbeitungseinheit verbunden, welche die Messdaten verarbeitet. Zur Versorgung mit elektrischer Energie weist die Messeinheit einen eigenen Energiespeicher und/oder einen eigenen Energieerzeuger auf.
Die Schrift US2008/195244A1 offenbart eine Werkzeugmaschine mit einem Werkzeug und einem Sensor zur Überwachung der Werkzeugmaschine. Der Sensor ist Teil einer Mess- und Sendeeinheit. Der Sensor misst Kenngrössen der Maschine wie eine Vibration des Werkzeugs, eine Temperatur des Werkzeugs oder einer Antriebseinheit, usw. Die Mess- und Sendeeinheit weist einen Sender auf, welcher die Messsignale des Sensors wandelt und per Funk an eine Empfängereinheit versendet, welche die gewandelten und gesendeten Messsignale empfängt und an zur Auswertung an eine Auswerteinheit weiterleitet.
Auch die Schrift WO2016/116804A1 zeigt eine Werkzeugmaschine mit einer Werkzeugspindel für ein Werkzeug. Ein Sensor überwacht den Zustand der Werkzeugspindel. Ein Sender empfängt und sendet Sensorinformationen an eine Empfänger, welcher die gesendeten Sensorinformationen empfängt. Der Empfänger ist mit einem Kontroller verbunden, welche die empfangenen Sensorinformationen auswertet und nach Auswertung der empfangenen Sensorinformationen eine Einstellung der Werkzeugmaschine anpasst.

Die Herstellprozesse finden in der Regel als zeitliche Abfolge von mehreren Prozessschritten statt. So wird ein Werkstück von einer Werkzeugmaschine in mehreren Prozessschritten von unterschiedlichen Werkzeugen bearbeitet. Die unterschiedlichen Werkzeuge werden zeitlich nacheinander am Werkstück positioniert und/oder das Werkstück wird von Zeit zu Zeit an einem neuen Werkzeug positioniert. Bei jedem Prozessschritt wird also ein Werkzeug und/oder das Werkstück ausgetauscht.

Gemäss der Lehre der Schrift EP1323495A1 wird das Werkzeug ausgetauscht und mit dem Austausch des Werkzeugs werden auch die dem Werkzeug zugeordnete Sensoreinrichtung und deren ortsfeste Spule ausgetauscht. Die Sensoreinrichtung und deren ortsfeste Spulen sind für jedes Werkzeug mehrmals vorhanden. Dies macht die Messkette teuer in der Anschaffung. Und dann wird auch noch bei jedem Austausch des Werkzeugs die Messkette unterbrochen. Um die Messkette wieder zu schliessen, müssen sich die Sensoreinrichtung und deren ortsfeste Spule beim Hauptverstärker anmelden.

Die Unterbrechung der Messkette ist unvermeidlich. Auch gemäss der Schrift WO2015176189A1 wird beim Austausch der Messeinheit und deren bewegter Antenne die Sendeverbindung zur ortsfesten Antenne unterbrochen. Zum Schliessen der Messkette müssen die beiden Antennen die unterbrochene Sendeverbindung wieder aufbauen.

Für einen schnellen und kostengünstigen Herstellprozess soll die Latenzzeit möglichst kurz sein, während der bei einem Prozessschritt eine Messkette unterbrochen ist.

Es ist eine erste Aufgabe der vorliegenden Erfindung, ein Verfahren aufzuzeigen, um bei einem Herstellprozess mit mehreren Prozessschritten bei jedem der Prozessschritte eine Messung von mindestens einer Messgrösse durch eine Messkette zu ermöglichen, bei dem eine bei einem Prozessschritt unterbrochene Messkette rasch wieder geschlossen wird. Als zweite Aufgabe der Erfindung soll die Messung der Messgrösse mit hoher Genauigkeit, hoher dynamischer Messauflösung und kurzer Latenzzeit erfolgen.

Und die Erfindung stellt sich die zweite Aufgabe, eine Messkette zur Durchführung des Verfahrens bereitzustellen, welche Messkette kostengünstig in der Anschaffung ist und welche Messkette mit möglichst geringem Aufwand in die Werkzeugmaschine, welche für die Prozessschritte verwendet werden, integrierbar ist.

### Darstellung der Erfindung

Diese beiden Aufgaben werden durch die Verfahren zur Messung einer Messgrösse bei einem Prozessschritt eines Herstellprozesses gemäss den drei unabhängigen Ansprüchen 1 bis 3 und durch die Systeme zur Durchführung der Verfahren gemäss den drei unabhängigen Ansprüchen 4 bis 6 gelöst.

Vorteilhafte Ausführungsformen der Erfindung werden in den abhängigen Ansprüchen beansprucht.

### Kurze Beschreibung der Zeichnungen

Im Folgenden wird die Erfindung beispielhaft unter Beizug der Figuren näher erklärt. Es zeigen
- Fig. 1: ein Flussdiagramm mit Verfahrensschritten des Verfahrens zur Messung einer Messgrösse MG bei einem Prozessschritt eines Herstellprozesses;
- Fig. 2: eine Ansicht eines Teils einer ersten Ausführungsform einer Messkette 1 zur Durchführung des Verfahrens gemäss Fig. 1, die Messkette 1 ist Bestandteil einer ersten Werkzeugmaschine 3;
- Fig. 3: ein Querschnitt durch einen Teil der ersten Werkzeugmaschine 3 gemäss Fig. 2;
- Fig. 4: eine Ansicht eines Teils einer zweiten Ausführungsform einer Messkette 1 zur Durchführung des Verfahrens gemäss Fig. 1, die Messkette 1 ist Bestandteil einer zweiten Werkzeugmaschine 4;
- Fig. 5: ein Querschnitt durch einen Teil der zweiten Werkzeugmaschine 4 gemäss Fig. 4;
- Fig. 6: eine Ansicht eines Teils einer dritten Ausführungsform einer Messkette 1 zur Durchführung des Verfahrens gemäss Fig. 1, die Messkette 1 ist Bestandteil einer dritten Werkzeugmaschine 4; und
- Fig. 7: ein Querschnitt durch einen Teil der dritten Werkzeugmaschine 4 gemäss Fig. 6.

Gleiche Bezugszeichen bezeichnen in den Figuren gleiche Gegenstände.

### Wege zur Ausführung der Erfindung

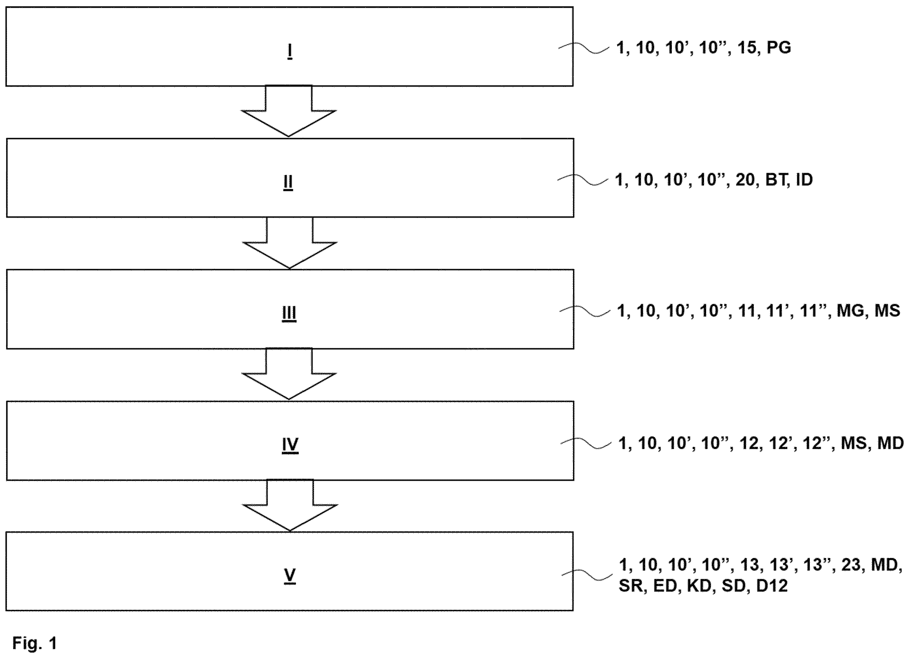

Fig. 1 zeigt ein Flussdiagramm mit Verfahrensschritten des Verfahrens zur Messung einer Messgrösse MG bei einem Prozessschritt eines Herstellprozesses. Die Messgrösse MG ist eine Kraft, ein Drehmoment, ein Biegemoment, eine Beschleunigung, eine Vibration, usw.

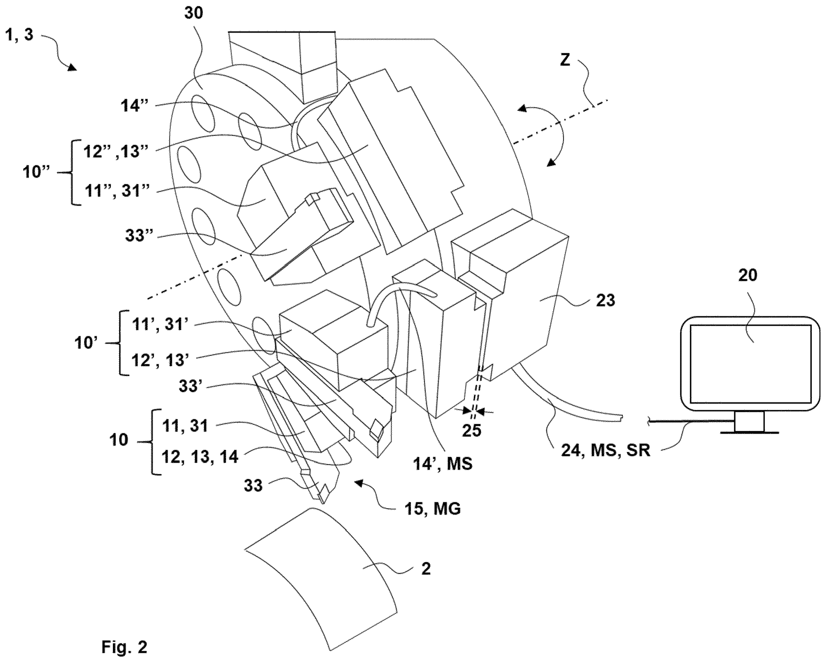

Zur Durchführung des Verfahrens wird eine Messkette 1 mit mehreren Messeinheiten 10, 10', 10'' und einer Auswerteeinheit 20 verwendet. Die Fig. 2 bis 7 zeigen Teile von drei Ausführungsformen einer Messkette 1 zur Durchführung des Verfahrens. Zuerst wird die Messkette 1 allgemein beschrieben. Danach werden weitere Details zur Messkette 1 in Abschnitten zu jeder der drei Ausführungsformen erläutert.

Jede der mehreren Messeinheiten 10, 10', 10" weist einen Sensor 11, 11', 11", eine Wandlereinheit 12, 12', 12" und eine Sekundärantenne 13, 13', 13" auf. Beispielsweise umfassen die mehreren Messeinheiten 10, 10', 10" eine erste Messeinheit 10 mit einem ersten Sensor 11, einer ersten Wandlereinheit 12 und einer ersten Sekundärantenne 13, eine zweite Messeinheit 10' mit einem zweiten Sensor 11', einer zweiten Wandlereinheit 12' und einer zweiten Sekundärantenne 13 und eine dritte Messeinheit 10'' mit einem dritten Sensor 11'', einer dritten Wandlereinheit 12'' und einer dritten Sekundärantenne 13".

Jede der mehreren Messeinheiten 10, 10', 10" weist ein Sekundärgehäuse 17, 17', 17" auf. Es liegen also mehrere Sekundärgehäuse 17, 17', 17'' vor. Beispielsweise umfassen die mehreren Sekundärgehäuse 17, 17', 17'' ein erstes Sekundärgehäuse 17 mit einem ersten sekundären Innenraum 19 für die erste Wandlereinheit 12 und die erste Sekundärantenne 13 auf, ein zweites Sekundärgehäuse 17' mit einem zweiten Sekundärraum 19' für die zweite Wandlereinheit 12' und die zweite Sekundärantenne 13' und ein drittes Sekundärgehäuse 17'' mit einem dritten Sekundärraum 19'' für die dritte Wandlereinheit 12' und die dritte Sekundärantenne 13'' auf. Die mehreren Sekundärgehäuse 17, 17', 17'' sind aus mechanisch beständigem Material wie Blech, Kunststoff, usw.

Und die Auswerteeinheit 20 weist ein Primärgehäuse 27 für eine Primärantenne 23 auf. Das Primärgehäuse 27 weist einen primären Innenraum 29 auf. Die Primärantenne 23 ist im primären Innenraum 29 angeordnet. Der primäre Innenraum 29 schützt die Primärantenne 23 vor schädlichen äusseren Einflüssen wie Schmutz, Kühlmittel, elektromagnetische Störstrahlung, usw. Auch das Primärgehäuse 27 ist aus mechanisch beständigem Material wie Blech, Kunststoff, usw.

In einem ersten Verfahrensschritt erfolgt ein Positionieren I von einer der mehreren Messeinheiten 10, 10', 10" in einer Messposition 15 zur Messung der Messgrösse MG. Die Messeinheit 10, 10', 10" wird in die Messposition 15 bewegt und befindet sich während des Prozessschritts in dieser Messposition 15.

In einem zweiten Verfahrensschritt erfolgt ein automatisches Koppeln II der positionierten Messeinheit 10, 10', 10'' mit der Auswerteeinheit 20 durch Aufbau einer Sendeverbindung zwischen der Sekundärantenne 13, 13', 13'' und der Primärantenne 23.

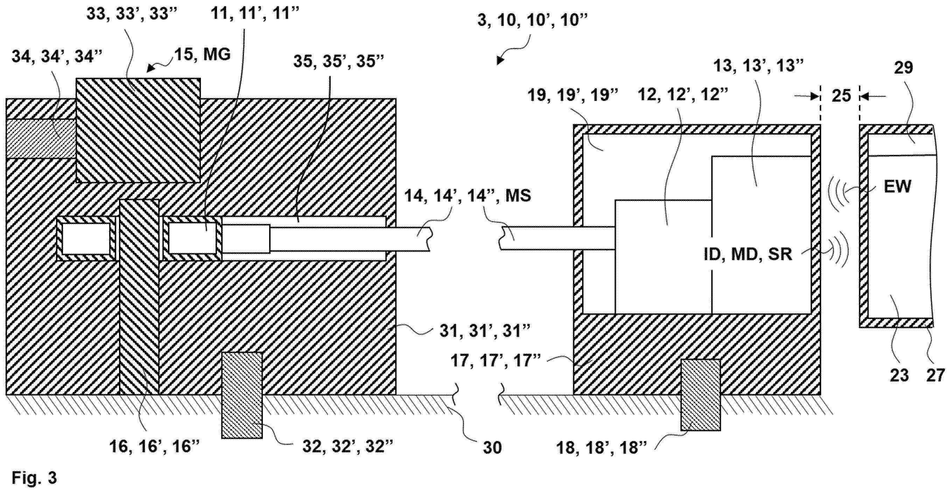

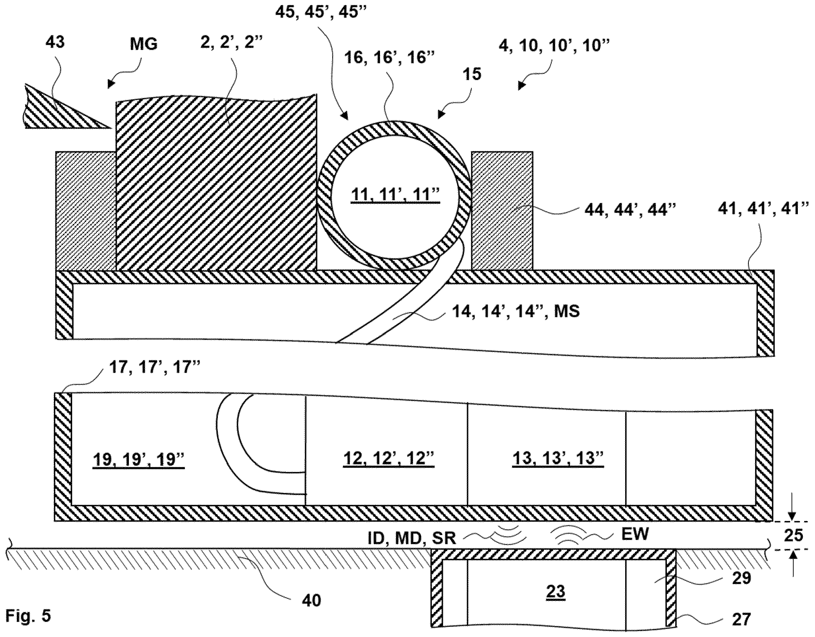

Für das Koppeln II der positionierten Messeinheit 10, 10', 10" mit der Auswerteeinheit 20 erzeugt die Primärantenne 23 ein elektromagnetisches Wechselfeld EW und sendet das elektromagnetische Wechselfeld EW aus. Das elektromagnetische Wechselfeld EW ist in Fig. 3 und 5 als gekrümmte Kreissegmente dargestellt. Vorzugsweise weist das elektromagnetische Wechselfeld EW eine Frequenz von 125kHz auf. Die Reichweite des elektromagnetischen Wechselfelds EW ist derart begrenzt, dass nur die Sekundärantenne 13, 13', 13'' einer vollständig in der Messposition 15 positionierten Messeinheit 10, 10', 10'' das elektromagnetische Wechselfeld EW empfangen kann.

Sobald und solange die Sekundärantenne 13, 13', 13" das elektromagnetische Wechselfeld EW empfängt, wird die Messeinheit 10, 10', 10" mit elektrischer Energie versorgt. Vorzugsweise ist die Sekundärantenne 13, 13', 13" eine Induktionsspule mit mehreren Windungen und einem Kondensator. Das elektromagnetische Wechselfeld EW induziert in der Induktionsspule eine elektrische Spannung, welche elektrische Spannung den Kondensator mit elektrischer Energie auflädt. Die elektrische Energie dient zum Betrieb der Messeinheit 10, 10', 10'', Bei aufgeladenem Kondensator ist die Messeinheit 10, 10', 10" mit ausreichend elektrischer Energie zum Betrieb der Messeinheit 10, 10', 10" versorgt. Vorzugsweise erfolgt das Aufladen des Kondensators innerhalb einer Betriebsbereitschaftszeit BT von 100ms, vorzugsweise innerhalb einer Betriebsbereitschaftszeit BT von 20ms.

Bei Erreichen der Betriebsbereitschaft der Messeinheit 10, 10', 10" baut die Sekundärantenne 13, 13', 13'' eine Sendeverbindung zur Primärantenne 23 auf. Vorzugsweise erfolgt der Aufbau der Sendeverbindung zur Primärantenne 23 sofort bei Erreichen der Betriebsbereitschaft der Messeinheit 10, 10', 10", Zum Aufbau der Sendeverbindung zur Primärantenne 23 sendet die Sekundärantenne 13, 13', 13'' eine Identifikationsnummer ID an die Primärantenne 23. Die Identifikationsnummer ID ist in einem Datenspeicher der Messeinheit 10, 10', 10'' gespeichert. Vorzugsweise ist der Datenspeicher in der Wandlereinheit 12, 12', 12" angeordnet. Die Identifikationsnummer ID identifiziert die Messeinheit 10, 10', 10" eindeutig. Die Primärantenne 23 empfängt die Identifikationsnummer ID. Das Senden der Identifikationsnummer ID ist in Fig. 3 und 5 als gekrümmte Kreissegmente dargestellt. Die Primärantenne 23 leitet die Identifikationsnummer ID an die Auswerteeinheit 20 ab. Die Auswerteeinheit 20 identifiziert die Messeinheit 10, 10', 10" anhand der empfangenen und abgeleiteten Identifikationsnummer ID. Mit dem Empfang der Identifikationsnummer ID und der Identifikation der Messeinheit 10, 10', 10" ist das Koppeln II der positionierten Messeinheit 10, 10', 10" mit der Auswerteeinheit 20 abgeschlossen.

In einem dritten Verfahrensschritt erfolgt ein automatisches Erzeugen III von Messsignalen MS unter der Wirkung der Messgrösse MG durch den Sensor 11, 11', 11" der positionierten Messeinheit 10, 10', 10".

Der Sensor 11, 11', 11" ist dazu ausgebildet, die Messgrösse MG zu erfassen und für die erfasste Messgrösse MG Messsignale MS zu erzeugen. Pro Zeiteinheit erfasst und erzeugt der Sensor 11, 11', 11" ein Messignal MS. Die Zeiteinheit kann eine Millisekunde (ms), 100Mikrosekunden (100µs), usw. betragen. Der Kehrwert der Zeiteinheit ist die dynamische Messauflösung. Somit erzeugt der Sensor 11, 11', 11" eine zeitliche Folge von Messsignalen MS, wo jedes Messsignal MS eine Grösse und einen Zeitpunkt aufweist.

Der Sensor 11, 11', 11'' kann ein piezoelektrischer Sensor, ein piezoresistiver Sensor, ein Dehnungsmessstreifen, usw. sein. Jeder Sensor 11, 11', 11" weist ein Signalkabel 14, 14', 14" auf. Das Signalkabel 14, 14', 14'' ist dazu ausgebildet, die Messsignale MS zur Wandlereinheit 12, 12', 12" abzuleiten.

Vorzugsweise ist der Sensor 11, 11', 11" ein piezoelektrischer Sensor. Der piezoelektrischer Sensor weist piezoelektrisches Material wie Quarz, Piezokeramik, usw. auf. Die Messgrösse MG wirkt als Zug- und/oder Druckbelastungen auf das piezoelektrische Material. Unter der Wirkung der Messgrösse MG erzeugt das piezoelektrische Material Messsignale MS in Form von elektrischer Ladung. Die Menge der elektrischen Ladung ist proportional zum Zahlenwert der Messgrösse MG. Gemäss Fig. 3, 5 und 7 ist der piezoelektrische Sensor über Vorspannmittel 16, 16', 16" wie eine Schraube, eine Hülse, usw. mit einer Vorspannkraft mechanisch vorgespannt. Durch die mechanische Vorspannung kann das piezoelektrische Material sowohl Zug- als auch Druckbelastungen erfassen. Der piezoelektrische Sensor kennzeichnet sich durch eine hohe dynamische Messauflösung von bis zu 35kHz aus.

In einem vierten Verfahrensschritt erfolgt ein automatisches Wandeln IV der Messsignale MS durch die Wandlereinheit 12, 12', 12" der positionierten Messeinheit 10, 10', 10'' in Messdaten MD.

Die Wandlereinheit 12, 12', 12'' ist dazu ausgebildet, die Messsignale MS in Messdaten MD zu digitalisieren. Vorzugsweise weist die Wandlereinheit 12, 12', 12'' für einen piezoelektrischen Sensor einen Ladungsverstärker auf. Der Ladungsverstärker verstärkt und wandelt die elektrische Ladung des piezoelektrischen Sensors in eine elektrische Spannung. Die Wandlereinheit 12, 12', 12" digitalisiert die elektrische Spannung in Messdaten MD. Die Grösse und der Zeitpunkt der Messsignale MS wird in eine Grösse und einen Zeitpunkt der Messdaten MD gewandelt und digitalisiert.

Vorzugsweise ist die Wandlereinheit 12, 12', 12' dazu ausgebildet, Einheitsdaten ED zu erzeugen, welche die Einheit der Messgrösse MG bezeichnet, für welche die Wandlereinheit 12, 12', 12" Messsignale MS in Messdaten MD gewandelt und digitalisiert hat. Beispielsweise hat eine Kraft als Messgrösse MG die Einheit Newton (N), ein Drehmoment oder ein Biegemoment als Messgrösse MG hat die Einheit Newtonmeter (Nm) und eine Beschleunigung oder eine Vibration als Messgrösse MG hat die Einheit Erdbeschleunigung (g).

Vorzugsweise ist die Wandlereinheit 12, 12', 12' dazu ausgebildet, Kalibrierdaten KD des Sensors 11, 11', 11" aus dem Datenspeicher der Messeinheit 10, 10', 10" auszulesen, welcher Sensor 11, 11', 11" unter der Wirkung der Messgrösse MG die Messsignale MS erzeugt hat. Die Kalibrierdaten KD bezeichnen die Empfindlichkeit des Sensors 11, 11', 11" in Abhängigkeit der Temperatur, bei welcher der Sensor 11, 11', 11" die Messsignale MS erzeugt hat. Für einen piezoelektrischen Sensor können die Kalibrierdaten KD auch die Empfindlichkeit des Sensors 11, 11', 11'' in Abhängigkeit der Grösse der mechanischen Vorspannkraft bezeichnen, mit welcher der Sensor 11, 11', 11" die Messsignale MS erzeugt hat.

Vorzugsweise ist die Wandlereinheit 12, 12', 12' dazu ausgebildet, Seriennummerdaten SD der Wandlereinheit 12, 12', 12'' aus dem Datenspeicher der Messeinheit 10, 10', 10" auszulesen. Die Seriennummerdaten SD identifizieren die Wandlereinheit 12, 12', 12", welche die Messsignale MS in Messdaten MD wandelt und digitalisiert, eindeutig.

Und in einem fünften Verfahrensschritt erfolgt ein automatisches Senden V der Messdaten MD durch die Sekundärantenne 13, 13', 13'' der positionierten Messeinheit 10, 10', 10" an die Primärantenne 23.

Die Sekundärantenne 13, 13', 13'' ist dazu ausgebildet, die Messdaten MD an die Primärantenne 23 zu senden. Vorzugsweise sendet die Sekundärantenne 13, 13', 13'' die Messdaten MD mit einer Trägerfrequenz von 13.56MHz und einer hohen Senderate SR von bis zu 1.6MBit/s an die Primärantenne 23. Somit kann der Sensor 11, 11', 11" die Messgrösse MG mit einer hohe dynamische Messauflösung von bis zu 35kHz messen und die Sekundärantenne 13, 13', 13'' kann die Messdaten MD bei einer Auflösung von bis zu 24Bit mit einer Senderate SR von bis zu 1.6MBit/s an die Primärantenne 23 senden.

Vorzugsweise ist Sekundärantenne 13, 13', 13'' dazu ausgebildet, die Einheitsdaten ED, die Kalibrierdaten KD und die Seriennummerdaten SD zusammen mit den Messdaten MD an die Primärantenne 23 zu senden.

Vorzugsweise weist die Auswerteeinheit 20 einen Datenspeicher mit darin gespeicherten wandlereinheitspezifischen Daten D12 auf. Die wandlereinheitspezifische Daten D12 umfassen für die Wandlereinheiten 12, 12', 12'' der Messkette 1 eine Zeitkonstante einer Wandlereinheit 12, 12', 12'', ein Rauschen einer Wandlereinheit 12, 12', 12'', usw. Die Auswerteeinheit 20 ist dazu ausgebildet, der mit den Messdaten MD übermittelten Seriennummerdaten SD, wandlereinheitspezifische Daten D12 von derjenigen Wandlereinheit 12, 12', 12" zuzuordnen, welche die Messsignale MS in Messdaten MD gewandelt und digitalisiert hat. Die Auswerteeinheit 20 liest die zugeordneten wandlereinheitspezifischen Daten D12 aus dem Datenspeicher aus.

Die Auswerteeinheit 20 ist dazu ausgebildet, die Messdaten MD auszuwerten. Beispielsweise stellt die Auswerteeinheit 20 die Messdaten MD graphisch als zeitliche Folge dar, die Ordinate gibt die Grösse der Messdaten MD an, die Abszisse gibt den Zeitpunkt der Messdaten MD an. Bei der Auswertung der Messdaten MD berücksichtigt die Auswerteeinheit 20 die Einheitsdaten ED, die Kalibrierdaten KD und die wandlereinheitspezifischen Daten D12. Vorzugsweise gibt die Auswerteeinheit 20 in der graphischen Darstellung die Einheitsdaten ED an. Vorzugsweise korrigiert die Auswerteeinheit 20 die Messdaten MD mit den Kalibrierdaten KD und mit den wandlereinheitspezifischen Daten D12. Beispielsweise multipliziert die Auswerteeinheit 20 die Grösse der einzelnen Messdaten MD mit der Empfindlichkeit des Sensors 11, 11', 11'' in Abhängigkeit der Temperatur und/oder mit der Empfindlichkeit des Sensors 11, 11', 11'' in Abhängigkeit der mechanischen Vorspannkraft. Beispielsweise filtert die Auswerteeinheit 20 die Messdaten MD mit der Zeitkonstante der Wandlereinheit 12, 12', 12" und/oder trägt das Rauschen der Wandlereinheit 12, 12', 12" als Fehlerbalken in der graphischen Darstellung ein. All diese Massnahmen erhöhen die Genauigkeit der Messung der Messgrösse MG.

### ERSTE AUSFÜHRUNGSFORM

In der ersten Ausführungsform gemäss Fig. 2 ist die Messkette 1 Bestandteil einer ersten Werkzeugmaschine 3 wie eine Drehmaschine, eine Revolverdrehmaschine, usw. Details zur ersten Werkzeugmaschine 3 sind in Fig. 3 dargestellt. Vorzugsweise ist die erste Werkzeugmaschine 3 eine Revolverdrehmaschine mit einem Revolver 30 und mit mehreren, auf dem Revolver 30 angeordneten Werkzeughaltern 31, 31', 31". Die Werkzeughalter 31, 31', 31'' sind auf dem Revolver 30 auswechselbar befestigt. Vorzugsweise sind die Werkzeughalter 31, 31', 31'' über Befestigungsmittel 32, 32', 32'' wie Schrauben, Bolzen, usw. am Revolver 30 befestigt. Der Revolver 30, die Werkzeughalter 31, 31', 31" und die Befestigungsmittel 32, 32', 32'' sind aus mechanisch beständigem Material wie Stahl, Werkzeugstahl, usw.

Jeder Werkzeughalter 31, 31', 31'' nimmt ein Werkzeug 33, 33', 33'' auf. Auch das Werkzeug 33, 33', 33'' ist aus mechanisch beständigem Material wie Stahl, Werkzeugstahl, usw. Vorzugsweise ist das Werkzeug 33, 33', 33'' über ein Einspannmittel 34, 34', 34'' wie eine Schraube, ein Stift, usw. im Werkzeughalter 32, 32', 32'' eingespannt. Das Werkzeug 33, 33', 33'' weist einen Schneidkeil aus hartem, festem und zähem Schneidstoff wie Metall, Keramik, usw. auf. Gemäss Fig. 2 sind beispielsweise drei Werkzeughalter 31, 31', 31" und drei Werkzeuge 33, 33', 33'' dargestellt. Die drei Werkzeughalter 31, 31', 31" und die drei Werkzeuge 33, 33', 33'' umfassen einen ersten Werkzeughalter 31, der ein erstes Werkzeug 32 aufnimmt, einen zweiten Werkzeughalter 31', der ein zweites Werkzeug 32' aufnimmt und einen dritten Werkzeughalter 31'', der ein drittes Werkzeug 33'' aufnimmt.

Der Revolver 30 ist an der ersten Werkzeugmaschine 3 beweglich angeordnet. Der Revolver 30 ist auf der ersten Werkzeugmaschine 3 um eine Längsachse Z drehbar, was in Fig. 2 durch einen gekrümmten Doppelpfeil dargestellt ist. Durch Verdrehen des Revolvers 30 um die Längsachse Z sind die Werkzeuge 33, 33', 33'' zeitlich nacheinander an einem Werkstück 2 positionierbar. Das Werkstück 2 ist aus beliebigem Material wie Metall, Kunststoff, Glas, usw. Das Werkstück 2 wird von den Werkzeugen 33, 33', 33" in mehreren Prozessschritten zeitlich nacheinander bearbeitet. Für jeden Prozessschritt wird eines der Werkzeuge 33, 33', 33'' am Werkstück 2 positioniert und das Werkstück 2 wird vom positionierten Werkzeug 33, 33', 33'' spanend bearbeitet. Gemäss Fig. 2 ist beispielsweise das erste Werkzeug 33 am Werkstück 2 positioniert. Bei der spanenden Bearbeitung wirkt die zu messende Messgrösse MG auf das positionierte Werkzeug 33, 33', 33". Vorzugsweise erfolgt der Austausch der Werkzeuge 33, 33', 33'' am Werkstück 2 innerhalb einer Rüstzeit von 500ms.

Jedem Werkzeughalter 31, 31', 31'' ist eine Messeinheit 10, 10', 10" zugeordnet. Gemäss Fig. 2 sind beispielsweise drei Werkzeughalter 31, 31', 31" und drei Messeinheiten 10, 10', 10" dargestellt. Die drei Messeinheiten 10, 10', 10'' umfassen eine erste Messeinheit 10 eines ersten Werkzeughalters 31, eine zweite Messeinheit 10' eines zweiten Werkzeughalters 31' und eine dritte Messeinheit 10'' eines dritten Werkzeughalters 31". Jede Messeinheit 10, 10', 10" weist einen Sensor 11, 11', 11'', eine Wandlereinheit 12, 12', 12" und eine Sekundärantenne 13, 13', 13'' auf.

Gemäss Fig. 3 weist jeder Werkzeughalter 31, 31', 31'' eine Aussparung 35, 35', 35'' auf. Der Sensor 11, 11', 11'' der dem Werkzeughalter 31, 31', 31" zugeordneten Messeinheit 10, 10', 10" ist in der Aussparung 35, 35', 35'' angeordnet. Vorzugsweise befindet sich die Aussparung 35, 35', 35" im Inneren des Werkzeughalters 31, 31', 31" und der Sensor 11, 11', 11" ist vollständig in der Aussparung 35, 35', 35'' angeordnet. Die Aussparung 35, 35', 35'' schützt den Sensor 11, 11', 11" vor schädlichen äusseren Einflüssen wie Schmutz, Kühlmittel, elektromagnetische Strahlung, usw. Der Werkzeughalter 31, 31', 31" weist eine Durchführung auf, welche das Signalkabel 14, 14', 14'' aus der Aussparung 35, 35', 35'' nach ausserhalb des Werkzeughalters 31, 31', 31" führt. Die Durchführung ist wasserdicht.

Vorzugsweise ist das Sekundärgehäuse 17, 17', 17'' auf dem Revolver 30 angeordnet. Das Sekundärgehäuse 17, 17', 17" ist über Haltemittel 18, 18', 18'' wie Schrauben, Bolzen, usw. am Revolver 30 festgehalten. Das Sekundärgehäuse 17, 17', 17'' ist vom Sensor 11, 11', 11" räumlich beabstandet angeordnet. Vorzugsweise ist das Sekundärgehäuse 17, 17', 17'' in einem konstanten räumlichen Abstand von kleiner/gleich 10cm vom Sensor 11, 11', 11" angeordnet.

Zur Auswechselung eines Werkzeughalters 31, 31', 31'' auf dem Revolver 30 wird der Werkzeughalter 31, 31', 31'' mit der ihm zugeordneten Messeinheit 10, 10', 10" zusammen ausgewechselt. Dazu wird der auszuwechselnde Werkzeughalter 31, 31', 31'' nach Lösen seines Befestigungsmittels 32, 32', 32'' und das über das Signalkabel 14, 14', 14'' mit ihm verbundene Sekundärgehäuse 17, 17', 17'' durch Lösen seines Haltemittels 18, 18', 18'' vom Revolver 30 entfernt. Daraufhin wird der neue Werkzeughalter 31, 31', 31'' über sein Befestigungsmittel 32, 32', 32" und das mit ihm über das Signalkabel 14, 14', 14'' verbundene Sekundärgehäuse 17, 17', 17'' über sein Haltemittel 18, 18', 18'' am Revolver 30 befestigt. Die Auswechslung des Werkzeughalters 31, 31', 31" mit der ihm zugeordneten Messeinheit 10, 10', 10" erfolgt rasch und ist einfach zu bewerkstelligen.

Gemäss Fig. 2 ist beispielsweise die erste Messeinheit 10 in der Messposition 15 positioniert und der erste Sensor 11 der ersten Messeinheit 10 erfasst die am ersten Werkzeug 33 wirkende Messgrösse MG.

Während die Sensoren 11, 11', 11" und die Sekundärgehäuse 17, 17', 17" an der ersten Werkzeugmaschine 3 beweglich angeordnet sind, sie sind ja auf dem Revolver 30 um die Längsachse Z drehbar, ist das Primärgehäuse 27 ortsfest an der ersten Werkzeugmaschine 3 angeordnet. Vorzugsweise ist das Primärgehäuse 27 über figürlich nicht dargestellte Befestigungsmittel wie Schrauben, Bolzen, usw. am Revolver 30 festgehalten. Das Sekundärgehäuse 17, 17', 17" und das Primärgehäuse 27 sind zueinander beweglich.

Die erste Werkzeugmaschine 3 ist dazu ausgebildet, dass für eine in der Messposition 15 positionierte Messeinheit 10, 10', 10'' das Sekundärgehäuse 17, 17', 17'' der in der Messposition 15 positionierten Messeinheit 10, 10', 10" in einer Sendedistanz 25 zum Primärgehäuse 27 zu liegen kommt. Vorzugsweise ist die Sendedistanz 25 zwischen dem Sekundärgehäuse 17, 17', 17'' der in der Messposition 15 positionierten Messeinheit 10, 10', 10" und dem Primärgehäuse 27 gleich der Reichweite des elektromagnetischen Wechselfelds EW.

### ZWEITE AUSFÜHRUNGSFORM

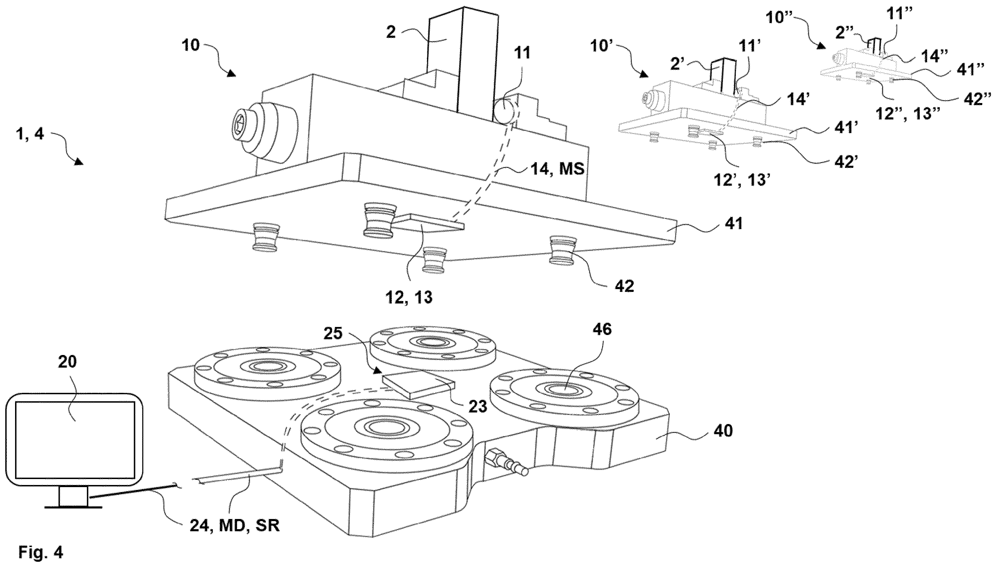

In der zweiten Ausführungsform gemäss Fig. 4 ist die Messkette 1 Bestandteil einer zweiten Werkzeugmaschine 4 wie ein Spannsystem, ein Nullpunktspannsystem, usw. Details zur zweiten Werkzeugmaschine 4 sind in Fig. 5 dargestellt. Vorzugsweise ist die zweite Werkzeugmaschine 4 ein Nullpunktspannsystem mit einer Trägereinheit 40 und mehreren Spanneinheiten 41, 41', 41". Jeweils eine der mehreren Spanneinheiten 41, 41', 41" ist auf der der Trägereinheit 40 austauschbar befestigt. Bei dem Nullpunktspannsystem lassen sich die Spanneinheiten 41, 41', 41" ohne Nullpunktverlust austauschen.

Vorzugsweise sind die mehreren Spanneinheiten 41, 41', 41" über Spannmittel 42, 42', 42'' wie Zapfen, Bolzen, usw. in Spannmodule 46 der Trägereinheit 40 befestigt. Beispielsweise weist gemäss Fig. 4 jede der mehreren Spanneinheiten 41, 41', 41" vier Spannmittel 42, 42', 42" auf, welche in vier Spannmodulen 46 der Trägereinheit 40 befestigbar sind. Nach dem Einführen der Spannmittel 42, 42', 42'' in die Spannmodule 46 werden die Spannmittel 42, 42', 42'' durch Formschluss wie Federkraft in die Spannmodulen 46 festgehalten. Das Lösen der Befestigung erfolgt pneumatisch. Vorzugsweise erfolgt der Austausch der Spanneinheiten 41, 41', 41'' innerhalb einer Rüstzeit von 500ms. Die Trägereinheit 40, die Spanneinheiten 41, 41', 41'', die Spannmittel 42, 42', 42'' und die Spannmodule 46 sind aus mechanisch beständigem Material wie Stahl, Werkzeugstahl, usw.

Jede der mehreren Spanneinheiten 41, 41', 41" nimmt ein Werkstück 2, 2', 2" auf. Das Werkstück 2, 2', 2" ist aus beliebigem Material wie Metall, Kunststoff, Glas, usw. Vorzugsweise ist das Werkstück 2, 2', 2" über ein Einspannmittel 44, 44', 44'' wie ein Schraubstock, eine Klemme, usw. in der Spanneinheit 41, 41', 41" eingespannt. Gemäss Fig. 4 sind beispielsweise drei Spanneinheiten 41, 41', 41" und drei Werkstücke 2, 2', 2" dargestellt. Die drei Spanneinheiten 41, 41', 41" und die drei Werkstücke 2, 2', 2" umfassen eine erste Spanneinheit 41, die ein erstes Werkstück 2 aufnimmt, eine zweite Spanneinheit 41', die ein zweites Werkstück 2' aufnimmt und eine dritte Spanneinheit 41", die ein drittes Werkstück 2" aufnimmt.

Es liegen also mehrere Werkstücke 2, 2', 2" vor. Die zweite Werkzeugmaschine 4 ist dazu ausgebildet, jedes der mehreren Werkstücke 2, 2', 2" in einem Prozessschritt mit einem Werkzeug 43 zu bearbeiten. Dazu werden die in den Spanneinheit 41, 41', 41" aufgenommenen Werkstücke 2, 2', 2" zeitlich nacheinander am Werkzeug 43 der zweiten Werkzeugmaschine 4 positioniert und das jeweils positionierte Werkstück 2, 2', 2" wird vom Werkzeug 43 spanend bearbeitet. Gemäss Fig. 5 weist das Werkzeug 43 einen Schneidkeil aus hartem, festem und zähem Schneidstoff wie Metall, Keramik, usw. auf. Bei der spanenden Bearbeitung wirkt die zu messende Messgrösse MG auf das positionierte Werkstück 2, 2', 2".

An jeder der mehreren Spanneinheiten 41, 41', 41" ist eine Messeinheit 10, 10', 10'' angeordnet. Gemäss Fig. 4 sind beispielsweise drei Spanneinheiten 41, 41', 41" und drei Messeinheiten 10, 10', 10" dargestellt. Die drei Messeinheiten 10, 10', 10" umfassen eine der ersten Spanneinheit 41 zugeordnete erste Messeinheit 10, eine der zweiten Spanneinheit 41' zugeordnete zweite Messeinheit 10' und eine der dritten Spanneinheit 41" zugeordnete dritte Messeinheit 10^{"}.

Gemäss Fig. 5 ist die Messeinheit 10, 10', 10" in der Messposition 15 positioniert und der Sensor 11, 11', 11" der Messeinheit 10, 10', 10" erfasst die am Werkstück 2, 2', 2" wirkende Messgrösse MG.

Vorzugsweise ist die Messeinheit 10, 10', 10" zusammen mit dem Werkstück 2, 2', 2" im Einspannmittel 44, 44', 44'' eingespannt. Der Sensor 11, 11', 11" ist räumlich nahe am Werkstück 2, 2', 2" in einer Aussparung 45, 45', 45'' eingespannt. Gemäss Fig. 5 ist der Sensor 11, 11', 11" im direkten mechanischen Kontakt mit dem Werkstück 2, 2', 2" eingespannt.

Vorzugsweise ist das Sekundärgehäuse 17, 17', 17'' auf der Spanneinheit 41, 41', 41" angeordnet. Vorzugsweise ist das Sekundärgehäuse 17, 17', 17'' bereichsweise mit einem Gehäuse der Spanneinheit 41, 41', 41" identisch. Das Sekundärgehäuse 17, 17', 17'' ist vom Sensor 11, 11', 11" räumlich beabstandet angeordnet. Vorzugsweise ist das Sekundärgehäuse 17, 17', 17'' in einem konstanten räumlichen Abstand von kleiner/gleich 10cm vom Sensor 11, 11', 11" angeordnet.

Zur Auswechselung eines Werkstücks 2, 2', 2" in der Spanneinheit 41, 41', 41" ist das Einspannmittel 44, 44', 44'' vom auszuwechselnden Werkstück 2, 2', 2" lösbar und mit einem ausgewechselten Werkstück 2, 2', 2" wieder verbindbar. Vorzugsweise verbleibt der Sensor 11, 11', 11" bei der Auswechslung in der Aussparung 45, 45', 45''. Nur das Werkstück 2, 2', 2" wird ausgewechselt. Das Lösen und Herstellen der Einspannung vom Werkstück 2, 2', 2" und dem Sensor 11, 11', 11" erfolgt einfach und rasch. Somit lässt sich das Werkstück 2, 2', 2" auswechseln, während der Sensor 11, 11', 11" und das Sekundärgehäuse 17, 17', 17'' mit der Wandlereinheit 12, 12', 12" und der Sekundärantenne 13, 13', 13" auf der Spanneinheit 41, 41', 41" bleiben.

Während die Sensoren 11, 11', 11" und die Sekundärgehäuse 17, 17', 17'' an der zweiten Werkzeugmaschine 4 beweglich angeordnet sind, sie sind ja mit den Spanneinheiten 41, 41', 41" austauschbar an der Trägereinheit 40 befestigt, ist das Primärgehäuse 27 ortsfest an der zweiten Werkzeugmaschine 4 angeordnet. Vorzugsweise ist das Primärgehäuse 27 bereichsweise mit einem Gehäuse der Trägereinheit 40 identisch. Das Sekundärgehäuse 17, 17', 17'' und das Primärgehäuse 27 sind zueinander beweglich.

Die zweite Werkzeugmaschine 4 ist dazu ausgebildet, dass für eine in der Messposition 15 positionierte Messeinheit 10, 10', 10'' das Sekundärgehäuse 17, 17', 17'' der in der Messposition 15 positionierten Messeinheit 10, 10', 10" in einer Sendedistanz 25 zum Primärgehäuse 27 zu liegen kommt. Vorzugsweise ist die Sendedistanz 25 kleiner/gleich 10mm. Vorzugsweise ist die Sendedistanz 25 zwischen dem Sekundärgehäuse 17, 17', 17'' der in der Messposition 15 positionierten Messeinheit 10, 10', 10" und dem Primärgehäuse 27 gleich der Reichweite des elektromagnetischen Wechselfelds EW.

### DRITTE AUSFÜHRUNGSFORM

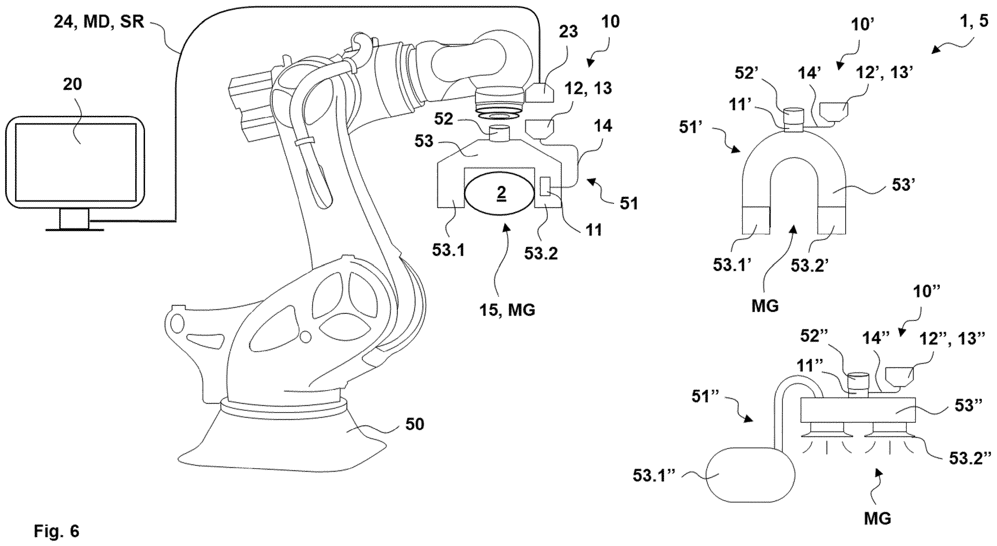

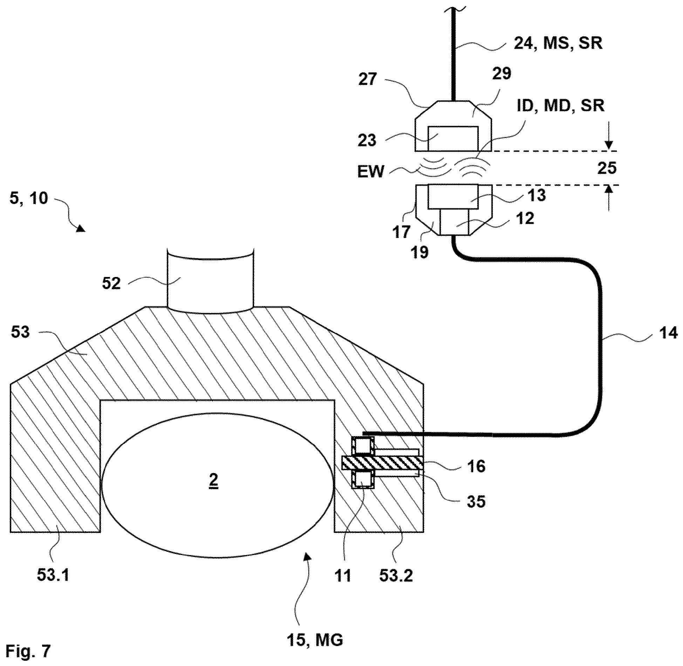

In der dritten Ausführungsform gemäss Fig. 6 ist die Messkette 1 Bestandteil einer dritten Werkzeugmaschine 5 wie ein Industrieroboter, ein Industrieroboter mit Wechselköpfen, usw. Details zur dritten Werkzeugmaschine 5 sind in Fig. 7 dargestellt. Vorzugsweise ist die dritte Werkzeugmaschine 5 ein Industrieroboter mit einem Manipulator 50 und mehreren Wechselköpfen 51, 51', 51". Jeweils einer der mehreren Wechselköpfe 51, 51', 51'' ist auf dem Manipulator 50 austauschbar befestigt. Vorzugsweise sind die Wechselköpfe 51, 51', 51'' über Kupplungsmittel 52, 52', 52'' wie Steckverbinder, Medienkupplungen, usw. am Manipulator 50 befestigt. Vorzugsweise erfolgt der Austausch der Wechselköpfe 51, 51', 51" am Manipulator 50 innerhalb einer Rüstzeit von 500ms. Der Manipulator 50, die Wechselköpfe 51, 51', 51'' und die Kupplungsmittel 52, 52', 52'' sind aus mechanisch beständigem Material wie Stahl, Werkzeugstahl, usw.

Jeder der mehreren Wechselköpfe 51, 51', 51'' nimmt ein Werkzeug 53, 53', 53'' auf. Gemäss Fig. 6 sind beispielsweise drei Wechselköpfe 51, 51', 51'' mit drei Werkzeugen 53, 53', 53'' dargestellt. Die drei Wechselköpfe 51, 51', 51'' und die drei Werkzeuge 53, 53', 53'' umfassen einen ersten Wechselkopf 51, der ein erstes Werkzeug 53 aufnimmt, einen zweiten Wechselkopf 51', der ein zweites Werkzeug 53' aufnimmt und einen dritten Wechselkopf 51", der ein drittes Werkzeug 53'' aufnimmt.

Das erste Werkzeug 53 in der Ausführung eines Parallelgreifers weist zwei Greifarme 53.1, 53.2 auf, zwischen denen eine Greifkraft ausübbar ist. Die Greifkraft ist eine Messgrösse MG.

Das zweite Werkzeug 53' in der Ausführung eines Magnetgreifers weist zwei Magnete 53.1', 53.2' auf, zwischen denen eine magnetische Anziehungskraft ausübbar ist. Die magnetische Anziehungskraft ist eine Messgrösse MG.

Das dritte Werkzeug 53''' in der Ausführung eines Sauggreifers weist eine Vakuumpumpe 53.1‴ und eine Saugvorrichtung 53.2‴, welche Vakuumpumpe 53.1‴ ein Vakuum erzeugen kann und welche Saugvorrichtung 53.2‴ infolge des Vakuums eine Saugkraft ausüben kann. Die Saugkraft ist eine Messgrösse MG.

Die dritte Werkzeugmaschine 5 ist dazu ausgebildet, ein Werkstück 2 in einem Prozessschritt zu handhaben. Die Handhabung ist beliebig und kann ein Halten, Transportieren, Bearbeiten, usw. sein. Im Beispiel gemäss Fig. 6 und 7 greift das erste Werkzeug 53 mit den Greifarmen 53.1, 53.2 ein eiförmiges Werkstück 2. Dazu übt das erste Werkzeug 53 eine zwischen den Greifarmen 53.1, 53.2 wirkende Greifkraft auf das Werkstück 2 aus. Durch die Greifkraft wird das Werkstück 2 vom ersten Werkzeug 53 gehalten und lasst sich handhaben.

An jedem der mehreren Wechselköpfe 51, 51', 51'' ist eine Messeinheit 10, 10', 10'' angeordnet. Gemäss Fig. 6 sind beispielsweise drei Wechselköpfe 51, 51', 51'' und drei Messeinheiten 10, 10', 10" dargestellt. Die drei Messeinheiten 10, 10', 10'' umfassen eine dem ersten Wechselkopf 51 zugeordnete erste Messeinheit 10, eine dem zweiten Wechselkopf 51'' zugeordnete zweite Messeinheit 10' und eine dem dritten Wechselkopf 51'' zugeordnete dritte Messeinheit 10".

Somit ist gemäss Fig. 6 und 7 die erste Messeinheit 10 in der Messposition 15 positioniert und der erste Sensor 11 der ersten Messeinheit 10 erfasst die am ersten Werkzeug 53 wirkende Greifkraft als Messgrösse MG.

Gemäss Fig. 7 weist der erste Wechselkopf 51 eine Aussparung 35 auf. Der erste Sensor 11 der dem ersten Wechselkopf 51 zugeordneten ersten Messeinheit 10 ist in der Aussparung 35 angeordnet. Vorzugsweise befindet sich die Aussparung 35 im Inneren des ersten Wechselkopfs 51 und der erste Sensor 11 ist vollständig in der Aussparung 35 angeordnet. Die Aussparung 35 schützt den ersten Sensor 11 vor schädlichen äusseren Einflüssen wie Schmutz, Kühlmittel, elektromagnetische Strahlung, usw. Der erste Wechselkopf 51 weist eine Durchführung auf, welche das Signalkabel 14 aus der Aussparung 35 nach ausserhalb des Wechselkopfs 51 führt. Die Durchführung ist wasserdicht.

Vorzugsweise ist das erste Sekundärgehäuse 17 auf dem ersten Wechselkopf 51 angeordnet. Das erste Sekundärgehäuse 17 ist über figürlich nicht dargestellte Haltemittel wie Schrauben, Bolzen, usw. am ersten Wechselkopf 51 festgehalten. Das erste Sekundärgehäuse 17 ist vom ersten Sensor 11 räumlich beabstandet angeordnet. Vorzugsweise ist das erste Sekundärgehäuse 17 in einem konstanten räumlichen Abstand von kleiner/gleich 10cm vom ersten Sensor 11 angeordnet.

Während die Sensoren 11, 11', 11" und die Sekundärgehäuse 17, 17', 17'' an der dritten Werkzeugmaschine 5 beweglich angeordnet sind, sie sind ja mit den Werkzeugköpfen 51, 51', 51'' austauschbar am Manipulator 50 befestigt, ist das Primärgehäuse 27 ortsfest an der dritten Werkzeugmaschine 5 angeordnet. Vorzugsweise ist das Primärgehäuse 27 über figürlich nicht dargestellte Haltemittel wie Schrauben, Bolzen, usw. am Manipulator 50 festgehalten. Das Sekundärgehäuse 17, 17', 17'' und das Primärgehäuse 27 sind zueinander beweglich.

Die dritte Werkzeugmaschine 5 ist dazu ausgebildet, dass für eine in der Messposition 15 positionierte Messeinheit 10, 10', 10'' das Sekundärgehäuse 17, 17', 17'' der in der Messposition 15 positionierten Messeinheit 10, 10', 10" in einer Sendedistanz 25 zum Primärgehäuse 27 zu liegen kommt. Vorzugsweise ist die Sendedistanz 25 kleiner/gleich 10mm. Vorzugsweise ist die Sendedistanz 25 zwischen dem Sekundärgehäuse 17, 17', 17'' der in der Messposition 15 positionierten Messeinheit 10, 10', 10" und dem Primärgehäuse 27 gleich der Reichweite des elektromagnetischen Wechselfelds EW.

### Bezugszeichenliste

- 1: Messkette
- 2, 2', 2": Werkstück
- 3: erste Werkzeugmaschine
- 4: zweite Werkzeugmaschine
- 5: dritte Werkzeugmaschine
- 10, 10', 10": Messeinheit
- 11, 11', 11": Sensor
- 12, 12', 12": Wandlereinheit
- 13, 13', 13": Sekundärantenne
- 14, 14', 14'': Messsignalkabel
- 15: Messposition
- 16, 16', 16'': Vorspannmittel
- 17, 17', 17'': Sekundärgehäuse
- 18, 18', 18'': Haltemittel
- 19, 19', 19'': primärer Innenraum
- 20: Auswerteeinheit
- 23: Primärantenne
- 24: Messdatenleitung
- 25: Sendedistanz
- 27: Primärgehäuse
- 29: primärer Innenraum
- 30: Revolver
- 31, 31', 31": Werkzeughalter
- 32, 32', 32'': Befestigungsmittel
- 33, 33', 33": Werkzeug
- 34, 34', 34'': Einspannmittel
- 35, 35', 35": Aussparung
- 40: Trägereinheit
- 41, 41', 41": Spanneinheit
- 42, 42', 42'': Spannmittel
- 43: Werkzeug
- 44, 44', 44'': Einspannmittel
- 45, 45', 45'': Aussparung
- 46: Spannmodul
- 50: Manipulator
- 51, 51', 51'': Wechselkopf
- 52, 52', 52'': Kupplungsmittel
- 53, 53', 53'': Werkzeug
- 53.1, 53.2: Greifarme
- 53.1', 53.2': Magnete
- 53.1": Vakuumpumpe
- 53.2'': Saugvorrichtung
- I: Positionieren
- II: automatisches Koppeln
- III: automatisches Erzeugen
- IV: automatisches Wandeln
- V: automatisches Senden
- BT: Betriebsbereitschaftszeit
- D12: wandlereinheitspezifische Daten
- ED: Einheitsdaten
- EW: elektromagnetisches Wechselfeld
- ID: Identifikationsnummer
- KD: Kalibrierdaten
- MG: Messgrösse
- MD: Messdaten
- MS: Messsignale
- SD: Seriennummerdaten
- SR: Senderate
- Z: Längsachse

## Patentansprüche

1. Verfahren zur Messung einer Messgrösse (MG) bei einem Prozessschritt eines Herstellprozesses, welcher Herstellprozess mit einer Werkzeugmaschine (3) durchgeführt wird, unter Verwendung einer Messkette (1) mit mehreren Messeinheiten (10, 10', 10") und einer Auswerteeinheit (20); wobei jede der Messeinheiten (10, 10', 10'') einen Sensor (11, 11', 11''), eine Wandlereinheit (12, 12', 12'') und eine Sekundärantenne (13, 13', 13'') aufweist; wobei die Auswerteeinheit (20) eine Primärantenne (23) aufweist;
welche Werkzeugmaschine (3) ausgebildet ist, ein Werkstück (2) in mehreren Prozessschritten mit mehreren Werkzeugen (33, 33', 33") zeitlich nacheinander zu bearbeiten, wozu in jedem Prozessschritt eines der mehreren Werkzeuge (33, 33', 33'') am Werkstück (2) positioniert wird, wobei jedem Werkzeug (33, 33', 33'') eine der mehreren Messeinheiten (10, 10', 10'') zugeordnet ist;
welche Werkzeugmaschine (3) eine Revolverdrehmaschine mit einem Revolver (30) ist, welcher Revolver (30) um eine Längsachse (Z) drehbar ist; wobei auf dem Revolver (30) mehrere Werkzeughalter (31, 31', 31") angeordnet sind; wobei jeder Werkzeughalter (31, 31', 31") ein Werkzeug (33, 33', 33") aufnimmt; wobei die Werkzeughalter (31, 31', 31'') mit dem Revolver (30) um die Drehachse (Z) drehbar sind; wobei durch Verdrehen des Revolvers (30) um die Drehachse (Z) die Werkzeuge (33, 33', 33'') zeitlich nacheinander am Werkstück (2) positionierbar sind;
wobei im Prozessschritt die folgenden Verfahrensschritte durchgeführt werden:
mit dem Positionieren (I) eines Werkzeugs (33, 33', 33'') am Werkstück (2) wird die dem positionierten Werkzeug (33, 33', 33'') zugeordnete Messeinheit (10, 10', 10'') in einer Messposition (15) zur Messung der Messgrösse (MG) positioniert;
automatisches Koppeln (II) der positionierten Messeinheit (10, 10', 10'') mit der Auswerteeinheit (20) durch Aufbau einer Sendeverbindung zwischen der Sekundärantenne (13, 13', 13'') und der Primärantenne (23);
automatisches Erzeugen (III) von Messsignalen (MS) unter der Wirkung der Messgrösse (MG) durch den Sensor (11, 11', 11") der positionierten Messeinheit (10, 10', 10");
automatisches Wandeln (IV) der Messsignale (MS) durch die Wandlereinheit (12, 12', 12'') der positionierten Messeinheit (10, 10', 10'') in Messdaten (MD); und
automatisches Senden (V) der Messdaten (MD) durch die Sekundärantenne (13, 13', 13'') der positionierten Messeinheit (10, 10', 10") an die Primärantenne (23).

2. Verfahren zur Messung einer Messgrösse (MG) bei einem Prozessschritt eines Herstellprozesses, welcher Herstellprozess mit einer Werkzeugmaschine (4) durchgeführt wird, unter Verwendung einer Messkette (1) mit mehreren Messeinheiten (10, 10', 10") und einer Auswerteeinheit (20); wobei jede der Messeinheiten (10, 10', 10'') einen Sensor (11, 11', 11''), eine Wandlereinheit (12, 12', 12'') und eine Sekundärantenne (13, 13', 13'') aufweist; wobei die Auswerteeinheit (20) eine Primärantenne (23) aufweist; welche Werkzeugmaschine (4) ausgebildet ist, mehrere Werkstücke (2, 2', 2'') in einem Prozessschritt zeitlich nacheinander mit einem Werkzeug (43) zu bearbeiten, wozu jedes Werkstück (2, 2', 2") zeitlich nacheinander am Werkzeug (43) positioniert wird, wobei jedem Werkstück (2, 2', 2") eine der mehreren Messeinheiten (10, 10', 10") zugeordnet ist;
welche Werkzeugmaschine (4) ein Nullpunktspannsystem mit einer Trägereinheit (40) mit mehreren Spanneinheiten (41, 41', 41'') ist; wobei jeweils eine der mehreren Spanneinheiten (41, 41', 41'') an der Trägereinheit (40) austauschbar befestigt ist; wobei jede der mehreren Spanneinheiten (41, 41', 41") ein Werkstück (2, 2', 2") aufnimmt; wobei die in den Spanneinheiten (41, 41', 41") aufgenommenen Werkstücke (2, 2', 2") zeitlich nacheinander am Werkzeug (43) der Werkzeugmaschine (4) positioniert werden;
wobei im Prozessschritt die folgenden Verfahrensschritte durchgeführt werden:
mit dem Positionieren (I) eines Werkstücks (2, 2', 2'') am Werkzeug (43) wird die dem positionierten Werkstück (2, 2', 2'') zugeordnete Messeinheit (10, 10', 10'') in einer Messposition (15) zur Messung der Messgrösse (MG) positioniert;
automatisches Koppeln (II) der positionierten Messeinheit (10, 10', 10'') mit der Auswerteeinheit (20) durch Aufbau einer Sendeverbindung zwischen der Sekundärantenne (13, 13', 13'') und der Primärantenne (23);
automatisches Erzeugen (III) von Messsignalen (MS) unter der Wirkung der Messgrösse (MG) durch den Sensor (11, 11', 11") der positionierten Messeinheit (10, 10', 10");
automatisches Wandeln (IV) der Messsignale (MS) durch die Wandlereinheit (12, 12', 12'') der positionierten Messeinheit (10, 10', 10'') in Messdaten (MD); und
automatisches Senden (V) der Messdaten (MD) durch die Sekundärantenne (13, 13', 13'') der positionierten Messeinheit (10, 10', 10") an die Primärantenne (23).

3. Verfahren zur Messung einer Messgrösse (MG) bei einem Prozessschritt eines Herstellprozesses, welcher Herstellprozess mit einer Werkzeugmaschine (5) durchgeführt wird, unter Verwendung einer Messkette (1) mit mehreren Messeinheiten (10, 10', 10") und einer Auswerteeinheit (20); wobei jede der Messeinheiten (10, 10', 10'') einen Sensor (11, 11', 11''), eine Wandlereinheit (12, 12', 12'') und eine Sekundärantenne (13, 13', 13'') aufweist; wobei die Auswerteeinheit (20) eine Primärantenne (23) aufweist;
welche Werkzeugmaschine (5) ausgebildet ist, ein Werkstück (2) in einem Prozessschritt mit einem von mehreren Werkzeugen (53, 53', 53'') zu handhaben, wozu eines der mehreren Werkzeuge (53, 53', 53'') am Werkstück (2) positioniert wird, wobei jedem Werkzeug (53, 53', 53'') eine der mehreren Messeinheiten (10, 10', 10") zugeordnet ist;
welche Werkzeugmaschine (5) ein Industrieroboter mit einem Manipulator (50) und mehreren Wechselköpfen (51, 51', 51'') ist; wobei jeweils einer der mehreren Wechselköpfe (51, 51', 51'') auf dem Manipulator (50) austauschbar befestigt ist; wobei jeder der mehreren Wechselköpfe (51, 51', 51'') ein Werkzeug (53, 53', 53") aufnimmt;
wobei im Prozessschritt die folgenden Verfahrensschritte durchgeführt werden:
mit dem Positionieren (I) eines Werkzeugs (53, 53', 53'') am Werkstück (2) am Werkzeug (43) wird die dem positionierten Werkzeug (53, 53', 53'') zugeordnete Messeinheit (10, 10', 10'') in einer Messposition (15) zur Messung der Messgrösse (MG) positioniert;
automatisches Koppeln (II) der positionierten Messeinheit (10, 10', 10'') mit der Auswerteeinheit (20) durch Aufbau einer Sendeverbindung zwischen der Sekundärantenne (13, 13', 13'') und der Primärantenne (23);
automatisches Erzeugen (III) von Messsignalen (MS) unter der Wirkung der Messgrösse (MG) durch den Sensor (11, 11', 11") der positionierten Messeinheit (10, 10', 10");
automatisches Wandeln (IV) der Messsignale (MS) durch die Wandlereinheit (12, 12', 12'') der positionierten Messeinheit (10, 10', 10") in Messdaten (MD); und
automatisches Senden (V) der Messdaten (MD) durch die Sekundärantenne (13, 13', 13'') der positionierten Messeinheit (10, 10', 10") an die Primärantenne (23).

4. System, bestehend aus einer Werkzeugmaschine (3) und einer Messkette (1) mit mehreren Messeinheiten (10, 10', 10'') und einer Auswerteeinheit (20); zur Durchführung des Verfahrens gemäss Anspruch 1,
wobei jede der Messeinheiten (10, 10', 10'') einen Sensor (11, 11', 11''), eine Wandlereinheit (12, 12', 12'') und eine Sekundärantenne (13, 13', 13'') aufweist; wobei die Auswerteeinheit (20) eine Primärantenne (23) aufweist;
welche Werkzeugmaschine (3) ausgebildet ist, ein Werkstück (2) in mehreren Prozessschritten mit mehreren Werkzeugen (33, 33', 33'') zeitlich nacheinander zu bearbeiten, wozu in jedem Prozessschritt eines der mehreren Werkzeuge (33, 33', 33'') am Werkstück (2) positioniert wird, wobei jedem Werkzeug (33, 33', 33'') eine der mehreren Messeinheiten (10, 10', 10'') zugeordnet ist;
welche Werkzeugmaschine (3) eine Revolverdrehmaschine mit einem Revolver (30) ist, welcher Revolver (30) um eine Längsachse (Z) drehbar ist; wobei auf dem Revolver (30) mehrere Werkzeughalter (31, 31', 31") angeordnet sind; wobei jeder Werkzeughalter (31, 31', 31") ein Werkzeug (33, 33', 33") aufnimmt; wobei die Werkzeughalter (31, 31', 31'') mit dem Revolver (30) um die Drehachse (Z) drehbar sind; wobei durch Verdrehen des Revolvers (30) um die Drehachse (Z) die Werkzeuge (33, 33', 33'') zeitlich nacheinander am Werkstück (2) positionierbar sind;
wobei jede der in der Messposition (15) positionierten Messeinheiten (10, 10', 10'') zum Aufbau einer Sendeverbindung zwischen der Sekundärantenne 13, 13', 13'') und der Primärantenne (23, 23', 23'') mit der Auswerteeinheit (20) koppelbar ist.

5. System, bestehend aus einer Werkzeugmaschine (4) und einer Messkette (1) mit mehreren Messeinheiten (10, 10', 10") und einer Auswerteeinheit (20); zur Durchführung des Verfahrens gemäss Anspruch 2,
wobei jede der Messeinheiten (10, 10', 10'') einen Sensor (11, 11', 11''), eine Wandlereinheit (12, 12', 12'') und eine Sekundärantenne (13, 13', 13'') aufweist; wobei die Auswerteeinheit (20) eine Primärantenne (23) aufweist;
welche Werkzeugmaschine (4) ausgebildet ist, mehrere Werkstücke (2, 2', 2'') in einem Prozessschritt zeitlich nacheinander mit einem Werkzeug (43) zu bearbeiten, wozu jedes Werkstück (2, 2', 2") zeitlich nacheinander am Werkzeug (43) positioniert wird, wobei jedem Werkstück (2, 2', 2") eine der mehreren Messeinheiten (10, 10', 10") zugeordnet ist;
welche Werkzeugmaschine (4) ein Nullpunktspannsystem mit einer Trägereinheit (40) mit mehreren Spanneinheiten (41, 41', 41'') ist; wobei jeweils eine der mehreren Spanneinheiten (41, 41', 41'') an der Trägereinheit (40) austauschbar befestigt ist; wobei jede der mehreren Spanneinheiten (41, 41', 41") ein Werkstück (2, 2', 2") aufnimmt; wobei die in den Spanneinheiten (41, 41', 41") aufgenommenen Werkstücke (2, 2', 2") zeitlich nacheinander am Werkzeug (43) der Werkzeugmaschine (4) positioniert werden;
wobei jede der in der Messposition (15) positionierten Messeinheiten (10, 10', 10'') zum Aufbau einer Sendeverbindung zwischen der Sekundärantenne 13, 13', 13'') und der Primärantenne (23, 23', 23'') mit der Auswerteeinheit (20) koppelbar ist.

6. System, bestehend aus einer Werkzeugmaschine (5) und einer Messkette (1) mit mehreren Messeinheiten (10, 10', 10") und einer Auswerteeinheit (20); zur Durchführung des Verfahrens gemäss Anspruch 3,
wobei jede der Messeinheiten (10, 10', 10'') einen Sensor (11, 11', 11''), eine Wandlereinheit (12, 12', 12'') und eine Sekundärantenne (13, 13', 13'') aufweist; wobei die Auswerteeinheit (20) eine Primärantenne (23) aufweist;
welche Werkzeugmaschine (5) ausgebildet ist, ein Werkstück (2) in einem Prozessschritt mit einem von mehreren Werkzeugen (53, 53', 53'') zu handhaben, wozu eines der mehreren Werkzeuge (53, 53', 53'') am Werkstück (2) positioniert wird, wobei jedem Werkzeug (53, 53', 53'') eine der mehreren Messeinheiten (10, 10', 10") zugeordnet ist;
welche Werkzeugmaschine (5) ein Industrieroboter mit einem Manipulator (50) und mehreren Wechselköpfen (51, 51', 51'') ist; wobei jeweils einer der mehreren Wechselköpfe (51, 51', 51'') auf dem Manipulator (50) austauschbar befestigt ist; wobei jeder der mehreren Wechselköpfe (51, 51', 51'') ein Werkzeug (53, 53', 53") aufnimmt;
wobei jede der in der Messposition (15) positionierten Messeinheiten (10, 10', 10'') zum Aufbau einer Sendeverbindung zwischen der Sekundärantenne (13, 13', 13'') und der Primärantenne (23, 23', 23'') mit der Auswerteeinheit (20) koppelbar ist.

7. System gemäss einem der Ansprüche 4 bis 6, **dadurch gekennzeichnet, dass** die Primärantenne (23) ausgebildet ist, ein elektromagnetisches Wechselfeld (EW) zu erzeugen und das elektromagnetische Wechselfeld (EW) auszusenden; dass eine Reichweite des elektromagnetischen Wechselfelds (EW) derart begrenzt ist, dass nur die vollständig in der Messposition (15) positionierte Messeinheiten (10, 10', 10'') das elektromagnetische Wechselfeld (EW) empfangen kann.

8. System gemäss Anspruch 7, **dadurch gekennzeichnet, dass** die Sekundärantenne (13, 13', 13'') ausgebildet ist, das elektromagnetische Wechselfeld (EW) zu empfangen; dass sobald und solange die Sekundärantenne (13, 13', 13'') das elektromagnetische Wechselfeld (EW) empfängt, die Messeinheit (10, 10', 10") mit elektrischer Energie versorgt ist; und dass die Messeinheit (10, 10', 10'') innerhalb einer Betriebsbereitschaftszeit (BT) von 100ms, vorzugsweise innerhalb einer Betriebsbereitschaftszeit (BT) von 20ms mit ausreichend elektrischer Energie zum Betrieb der Messeinheit (10, 10', 10") versorgt ist.

9. System gemäss Anspruch 8, **dadurch gekennzeichnet, dass** die Sekundärantenne (13, 13', 13'') ausgebildet ist, bei Erreichen der Betriebsbereitschaft der Messeinheit (10, 10', 10'') die Sendeverbindung zur Primärantenne (23) aufzubauen, in dem die Sekundärantenne (13, 13', 13'') eine die Messeinheit (10, 10', 10'') eindeutig identifizierende Identifikationsnummer (ID) an die Primärantenne (23) sendet; dass die Primärantenne (23) ausgebildet ist, die Identifikationsnummer (ID) zu empfangen und an die die Auswerteeinheit (20) abzuleiten; und dass die Auswerteeinheit (20) ausgebildet ist, die Messeinheit (10, 10', 10'') anhand der empfangenen und abgeleiteten Identifikationsnummer (ID) zu identifizieren.

10. System gemäss einem der Ansprüche 4 bis 6, **dadurch gekennzeichnet, dass** die Wandlereinheit (12, 12', 12") und die Sekundärantenne (13, 13', 13'') in einem Sekundärgehäuse (17, 17', 17'') der Werkzeugmaschine (3, 4, 5) angeordnet sind; dass die Primärantenne (23) in einem Primärgehäuse (27) der Werkzeugmaschine (3, 4, 5) angeordnet ist; und dass das Sekundärgehäuse (17, 17', 17'') und das Primärgehäuse (27) zueinander beweglich sind.

11. System gemäss Anspruch 10, **dadurch gekennzeichnet, dass** für eine in der Messposition (15) positionierte Messeinheit (10, 10', 10'') das Sekundärgehäuse (17, 17', 17'') der in der Messposition (15) positionierten Messeinheit (10, 10', 10'') in einer Sendedistanz (25) zum Primärgehäuse (27) zu liegen kommt.

12. System gemäss Anspruch 11, **dadurch gekennzeichnet, dass** die Primärantenne (23) ausgebildet ist, ein elektromagnetisches Wechselfeld (EW) zu erzeugen; und dass die Sendedistanz (25) zwischen dem Sekundärgehäuse (17, 17', 17'') der in der Messposition (15) positionierten Messeinheit (10, 10', 10'') und dem Primärgehäuse (27) gleich der Reichweite des elektromagnetischen Wechselfelds (EW) ist.

13. System gemäss einem der Ansprüche 4 bis 12, **dadurch gekennzeichnet, dass** der Sensor (11, 11', 11'') ein piezoelektrischer Sensor mit piezoelektrischem Material ist; dass die Messgrösse (MG) als Zug- und/oder Druckbelastungen auf das piezoelektrische Material wirkt und das piezoelektrische Material unter der Wirkung der Messgrösse (MG) Messsignale (MS) in Form von elektrischer Ladung erzeugt; dass die Wandlereinheit (12, 12', 12'') einen Ladungsverstärker aufweist, welcher Ladungsverstärker ausgebildet ist, die elektrische Ladung des piezoelektrischen Sensors zu verstärken und in eine elektrische Spannung zu wandeln; dass die Wandlereinheit (12, 12', 12'') ausgebildet ist, die elektrische Spannung in Messdaten (MD) zu digitalisieren; dass der piezoelektrische Sensor ausgebildet ist, die Messgrösse (MG) mit einer hohe dynamische Messauflösung von bis zu 35kHz zu messen; und dass die Sekundärantenne (13, 13', 13") ausgebildet ist, die Messdaten (MD) mit einer Senderate (SR) von bis zu 424kBit/s an die Primärantenne (23) zu senden.

14. System gemäss einem der Ansprüche 4 bis 12, **dadurch gekennzeichnet, dass** der Sensor (11, 11', 11'') ein piezoelektrischer Sensor mit piezoelektrischem Material ist; dass die Messgrösse (MG) als Zug- und/oder Druckbelastungen auf das piezoelektrische Material wirkt und das piezoelektrische Material unter der Wirkung der Messgrösse (MG) Messsignale (MS) in Form von elektrischer Ladung erzeugt; dass die Wandlereinheit (12, 12', 12'') einen Ladungsverstärker aufweist, welcher Ladungsverstärker ausgebildet ist, die elektrische Ladung des piezoelektrischen Sensors zu verstärken und in eine elektrische Spannung zu wandeln; dass die Wandlereinheit (12, 12', 12'') ausgebildet ist, die elektrische Spannung in Messdaten (MD) zu digitalisieren; dass die Wandlereinheit (12, 12', 12') ausgebildet ist, Einheitsdaten (ED) zu erzeugen, welche die Einheit der Messgrösse (MG) bezeichnet, für welche die Wandlereinheit (12, 12', 12") Messsignale (MS) in Messdaten (MD) gewandelt und digitalisiert hat; dass die Wandlereinheit (12, 12', 12") ausgebildet ist, Kalibrierdaten (KD) des Sensors (11, 11', 11") aus einer Speichereinheit der Messeinheit (10, 10', 10'') auszulesen; dass die Wandlereinheit (12, 12', 12') ausgebildet ist, Seriennummerdaten (SD) der Wandlereinheit (12, 12', 12'') aus dem Datenspeicher der Messeinheit (10, 10', 10'') auszulesen; und dass die Sekundärantenne (13, 13', 13'') ausgebildet ist, die Einheitsdaten (ED), die Kalibrierdaten (KD) und die Seriennummerdaten (SD) zusammen mit den Messdaten (MD) an die Primärantenne (23) zu senden.

## Claims

1. A procedure for measuring a measured variable (MG) in a process step of a manufacturing process, which manufacturing process is carried out by a machine tool (3), which procedure uses a measurement chain (1) comprising a plurality of measurement units (10, 10', 10'') and an evaluation unit (20); wherein each of the measurement units (10, 10', 10") comprises a sensor (11, 11', 11"), a converter unit (12, 12', 12'') and a secondary antenna (13, 13', 13''); wherein the evaluation unit (20) comprises a primary antenna (23);
which machine tool (3) is adapted to machine a workpiece (2) by a plurality of tools (33, 33', 33'') in a plurality of process steps in a chronological sequence, for which purpose one of the plurality of tools (33, 33', 33'') is positioned on the workpiece (2) in each process step, wherein one of the plurality of measurement units (10, 10', 10'') is associated with each tool (33, 33', 33'');
which machine tool (3) is a turret lathe with a turret (30), which turret (30) is rotatable about a longitudinal axis (Z); wherein a plurality of tool holders (31, 31', 31") is arranged on the turret (30); wherein each tool holder (31, 31', 31'') accommodates a tool (33, 33', 33''); wherein a measurement unit (10, 10', 10''); wherein the tool holder (31, 31', 31") can be rotated with the turret (30) about the axis of rotation (Z); wherein, by rotating the turret (30) about the axis of rotation (Z), the tools (33, 33', 33'') can be positioned on the workpiece (2) one after the other in time;
wherein the following steps of the procedure are carried out in the process step:
by positioning (I) a tool (33, 33', 33") on the workpiece (2) the measurement unit (10, 10', 10'') associated with the positioned tool (33, 33', 33") is positioned in a measuring position (15) for measuring the measured variable (MG);
automatically coupling (II) the positioned measurement unit (10, 10', 10'') with the evaluation unit (20) by establishing a transmission connection between the secondary antenna (13, 13', 13'') and the primary antenna (23);
automatically generating (III) measurement signals (MS) by the sensor (11, 11', 11") of the positioned measurement unit (10, 10', 10'') under the action of the measured variable (MG);
automatically converting (IV) the measurement signals (MS) into measurement data (MD) by the converter unit (12, 12', 12'') of the positioned measurement unit (10, 10', 10''); and
automatically transmitting (V) the measurement data (MD) by the secondary antenna (13, 13', 13'') of the positioned measurement unit (10, 10', 10^{"}) to the primary antenna (23).

2. A procedure for measuring a measured variable (MG) in a process step of a manufacturing process, which manufacturing process is carried out by a machine tool (4), which procedure uses a measurement chain (1) comprising a plurality of measurement units (10, 10', 10") and an evaluation unit (20); wherein each of the measurement units (10, 10', 10'') comprises a sensor (11, 11', 11''), a converter unit (12, 12', 12'') and a secondary antenna (13, 13', 13''); wherein the evaluation unit (20) comprises a primary antenna (23);
which machine tool (4) is adapted to machine a plurality of workpieces (2, 2', 2'') by a tool (43) in a chronological sequence in a process step, for which purpose each workpiece (2, 2', 2'') is positioned on the tool (43) in a chronological sequence, wherein a measurement unit (10, 10', 10'') is associated with each workpiece (2, 2', 2'');
which machine tool (4) is a zero point clamping system with a carrier unit (40) and a plurality of clamping units (41, 41', 41''); wherein each of the plurality of clamping units (41, 41', 41'') is changeably attached to the carrier unit (40) ;
wherein each of the plurality of clamping units (41, 41', 41") accommodates a workpiece (2, 2', 2"); wherein the workpieces (2, 2', 2'') accommodated in the clamping units (41, 41', 41'') can be positioned on the tool (43) of the machine tool (4) one after the other in time;
wherein the following steps of the procedure are carried out in the process step:
by positioning (I) a workpiece (2, 2', 2'') on the tool (43) the measuring unit (10, 10', 10'') associated with the workpiece (2, 2', 2'') is positioned in a measuring position (15) for measuring the measured variable (MG);
automatically coupling (II) the positioned measurement unit (10, 10', 10'') with the evaluation unit (20) by establishing a transmission connection between the secondary antenna (13, 13', 13'') and the primary antenna (23);
automatically generating (III) measurement signals (MS) by the sensor (11, 11', 11") of the positioned measurement unit (10, 10', 10'') under the action of the measured variable (MG);
automatically converting (IV) the measurement signals (MS) into measurement data (MD) by the converter unit (12, 12', 12'') of the positioned measurement unit (10, 10', 10''); and
automatically transmitting (V) the measurement data (MD) by the secondary antenna (13, 13', 13'') of the positioned measurement unit (10, 10', 10") to the primary antenna (23).

3. A procedure for measuring a measured variable (MG) in a process step of a manufacturing process, which manufacturing process is carried out by a machine tool (5), which procedure uses a measurement chain (1) comprising a plurality of measurement units (10, 10', 10") and an evaluation unit (20); wherein each of the measurement units (10, 10', 10'') comprises a sensor (11, 11', 11''), a converter unit (12, 12', 12'') and a secondary antenna (13, 13', 13''); wherein the evaluation unit (20) comprises a primary antenna (23);
which machine tool (5) is adapted to handle a workpiece (2) by one of a plurality of tools (53, 53', 53'') in a process step, for which purpose one of the plurality of tools (53, 53', 53'') is positioned on the workpiece (2), wherein one of the plurality of measurement units (10, 10', 10'') is associated with each of the plurality of tools (53, 53', 53'');
which machine tool (5) is an industrial robot with a manipulator (50) and a plurality of changeable heads (51, 51', 51''); wherein each of the plurality of changeable heads (51, 51', 51'') is changeably attached at the manipulator (50); wherein each of the plurality of changeable heads (51, 51', 51'') accommodates a tool (53, 53', 53");
wherein the following steps of the procedure are carried out in the process step:
by positioning (I) a tool (53, 53', 53") on the workpiece (2) the measurement unit (10, 10', 10'') associated with the positioned tool (53, 53', 53") is positioned in a measuring position (15) for measuring the measured variable (MG);
automatically coupling (II) the positioned measurement unit (10, 10', 10'') with the evaluation unit (20) by establishing a transmission connection between the secondary antenna (13, 13', 13'') and the primary antenna (23);
automatically generating (III) measurement signals (MS) by the sensor (11, 11', 11") of the positioned measurement unit (10, 10', 10'') under the action of the measured variable (MG);
automatically converting (IV) the measurement signals (MS) into measurement data (MD) by the converter unit (12, 12', 12'') of the positioned measurement unit (10, 10', 10''); and
automatically transmitting (V) the measurement data (MD) by the secondary antenna (13, 13', 13'') of the positioned measurement unit (10, 10', 10") to the primary antenna (23) .

4. System consisting of a machine tool (3) and a measuring chain (1) with a plurality of measurement units (10, 10', 10'') and an evaluation unit (20); for carrying out the procedure according to claim 1,
wherein each of the measurement units (10, 10', 10'') comprises a sensor (11, 11', 11"), a converter unit (12, 12', 12'') and a secondary antenna (13, 13', 13''); wherein the evaluation unit (20) comprises a primary antenna (23);
which machine tool (3) is adapted to machine a workpiece (2) by a plurality of tools (33, 33', 33") in a plurality of process steps in a chronological sequence, for which purpose one of the plurality of tools (33, 33', 33'') is positioned on the workpiece (2) in each process step, wherein one of the plurality of measurement units (10, 10', 10'') is associated with each tool (33, 33', 33'');
which machine tool (3) is a turret lathe with a turret (30), which turret (30) is rotatable about a longitudinal axis (Z); wherein a plurality of tool holders (31, 31', 31") is arranged on the turret (30); wherein each tool holder (31, 31', 31'') accommodates a tool (33, 33', 33''); wherein a measurement unit (10, 10', 10''); wherein the tool holder (31, 31', 31") can be rotated with the turret (30) about the axis of rotation (Z); wherein, by rotating the turret (30) about the axis of rotation (Z), the tools (33, 33', 33'') can be positioned on the workpiece (2) one after the other in time;
wherein each of the measurement units (10, 10', 10'') positioned in the measuring position (15) can be coupled to the evaluation unit (20) for establishing a transmission connection between the secondary antenna (13, 13', 13'') and the primary antenna (23, 23', 23").

5. System consisting of a machine tool (4) and a measuring chain (1) with a plurality of measurement units (10, 10', 10'') and an evaluation unit (20); for carrying out the procedure according to claim 2,
wherein each of the measurement units (10, 10', 10'') comprises a sensor (11, 11', 11''), a converter unit (12, 12', 12'') and a secondary antenna (13, 13', 13''); wherein the evaluation unit (20) comprises a primary antenna (23);
which machine tool (4) is adapted to machine a plurality of workpieces (2, 2', 2'') by a tool (43) in a chronological sequence in a process step, for which purpose each workpiece (2, 2', 2'') is positioned on the tool (43) in a chronological sequence, wherein a measurement unit (10, 10', 10'') is associated with each workpiece (2, 2', 2");
which machine tool (4) is a zero point clamping system with a carrier unit (40) and a plurality of clamping units (41, 41', 41"); wherein each of the plurality of clamping units (41, 41', 41'') is changeably attached to the carrier unit (40); wherein each of the plurality of clamping units (41, 41', 41'') accommodates a workpiece (2, 2', 2''); wherein the workpieces (2, 2', 2'') accommodated in the clamping units (41, 41', 41") can be positioned on the tool (43) of the machine tool (4) one after the other in time;
wherein each of the measurement units (10, 10', 10'') positioned in the measuring position (15) can be coupled to the evaluation unit (20) for establishing a transmission connection between the secondary antenna (13, 13', 13'') and the primary antenna (23, 23', 23").

6. System consisting of a machine tool (5) and a measuring chain (1) with a plurality of measurement units (10, 10', 10'') and an evaluation unit (20); for carrying out the procedure according to claim 3,
wherein each of the measurement units (10, 10', 10'') comprises a sensor (11, 11', 11"), a converter unit (12, 12', 12'') and a secondary antenna (13, 13', 13''); wherein the evaluation unit (20) comprises a primary antenna (23);
which machine tool (5) is adapted to machine a workpiece (2) by a plurality of tools (53, 53', 53'') in a plurality of process steps in a chronological sequence, for which purpose one of the plurality of tools (53, 53', 53'') is positioned on the workpiece (2) in each process step, wherein one of the plurality of measurement units (10, 10', 10'') is associated with each tool (53, 53', 53");
which machine tool (5) is an industrial robot with a manipulator (50) and a plurality of changeable heads (51, 51', 51"); wherein each of the plurality of changeable heads (51, 51', 51'') is changeably attached at the manipulator (50); wherein each of the plurality of changeable heads (51, 51', 51'') accommodates a tool (53, 53', 53");
wherein each of the measurement units (10, 10', 10") positioned in the measuring position (15) can be coupled to the evaluation unit (20) for establishing a transmission connection between the secondary antenna (13, 13', 13") and the primary antenna (23, 23', 23").

7. System according to any of the claims 4 to 6, **characterized in that** the primary antenna (23) generates an electromagnetic alternating field (EW) and transmits the electromagnetic alternating field (EW); **in that** a range of the electromagnetic alternating field (EW) is limited in such a way that only those measurement units (10, 10', 10") that are completely positioned in the measuring position (15) are able to receive the electromagnetic alternating field (EW).

8. System according to claim 7, **characterized in that** as soon as and as long as the secondary antenna (13, 13', 13'') receives the electromagnetic alternating field (EW), the measurement unit (10, 10', 10") is supplied with electrical energy; and **in that** the measurement unit (10, 10', 10") is supplied with sufficient electrical energy to operate the measurement unit (10, 10', 10") within a ready for operation time (BT) of 100ms, preferably within a ready for operation time (BT) of 20ms.

9. System according to claim 8, **characterized in that** the secondary antenna (13, 13', 13") establishes the transmission connection to the primary antenna (23) when the measurement unit (10, 10', 10'') is ready for operation, **in that** the secondary antenna (13, 13', 13") transmits an identification number (ID) unambiguously identifying the measurement unit (10, 10', 10") to the primary antenna (23); **in that** the primary antenna (23) receives the identification number (ID) and forwards it to the evaluation unit (20); and **in that** the evaluation unit (20) identifies the measurement unit (10, 10', 10") on the basis of the received and transmitted identification number (ID).

10. System according to any of the claims 4 to 6, **characterized in that** the converter unit (12, 12', 12") and the secondary antenna (13, 13', 13") are arranged in a secondary housing (17, 17', 17") of the machine tool (3, 4, 5); **in that** the primary antenna (23) is arranged in a primary housing (27) of the machine tool (3, 4, 5); and **in that** the secondary housing (17, 17', 17") and the primary housing (27) are movable relative to each other.

11. System according to claim 10, **characterized in that** for a measurement unit (10, 10', 10") positioned in the measuring position (15), the secondary housing (17, 17', 17") of the measurement unit (10, 10', 10") positioned in the measuring position (15) is positioned at a transmission distance (25) from the primary housing (27).

12. System according to claim 11, **characterized in that** the primary antenna (23) generates an electromagnetic alternating field (EW); and **in that** the transmission distance (25) between the secondary housing (17, 17', 17") of the measurement unit (10, 10', 10") positioned in the measuring position (15) and the primary housing (27) is equal to the range of the electromagnetic alternating field (EW) .

13. System according to any of the claims 4 to 12, **characterized in that** the sensor (11, 11', 11'') is a piezoelectric sensor comprising piezoelectric material; **in that** the measured variable (MG) acts onto the piezoelectric material in the form of tensile and/or compressive loads and under the action of the measured variable (MG) the piezoelectric material generates measurement signals (MS) in the form of electrical charge; **in that** the converter unit (12, 12', 12") comprises a charge amplifier, which charge amplifier amplifies the electrical charge of the piezoelectric sensor and converts it into an electrical voltage; **in that** the converter unit (12, 12', 12") digitizes the electrical voltage into measurement data (MD); **in that** the piezoelectric sensor measures the measured variable (MG) with a high dynamic measurement resolution of up to 35kHz; and **in that** the secondary antenna (13, 13', 13") transmits the measurement data (MD) to the primary antenna (23) at a transmission rate (SR) of up to 424kBit/s.

14. System according to any of the claims 4 to 12, **characterized in that** the sensor (11, 11', 11'') is a piezoelectric sensor comprising piezoelectric material; **in that** the measured variable (MG) acts onto the piezoelectric material in the form of tensile and/or compressive loads and under the action of the measured variable (MG) the piezoelectric material generates measurement signals (MS) in the form of electrical charge; **in that** the converter unit (12, 12', 12") comprises a charge amplifier, which charge amplifier amplifies the electrical charge of the piezoelectric sensor and converts it into an electrical voltage; **in that** the converter unit (12, 12', 12") digitizes the electrical voltage into measurement data (MD); **in that** the converter unit (12, 12', 12") generates unit data (ED) that indicates the unit of the measured variable (MG) for which the converter unit (12, 12', 12") has converted and digitized measurement signals (MS) into measurement data (MD); **in that** the converter unit (12, 12', 12") reads out calibration data (KD) of the sensor (11, 11', 11") from a memory unit of the measurement unit (10, 10', 10''); **in that** the converter unit (12, 12', 12') reads out serial number data (SD) of the converter unit (12, 12', 12") from the data memory of the measurement unit (10, 10', 10"); and **in that** the secondary antenna (13, 13', 13") transmits the unit data (ED), the calibration data (KD) and the serial number data (SD) together with the measurement data (MD) to the primary antenna (23).

## Revendications

1. Procédé de mesure d'une valeur de mesure (MG) lors d'une étape du processus d'un processus de fabrication, lequel processus de fabrication est mis en œuvre par une machine-outil (3) utilisant une chaîne de mesure (1) comprenant une pluralité d'unités de mesure (10, 10', 10'') et une unité d'évaluation (20) ; dans lequel chacune des unités de mesure (10, 10', 10") comprend un capteur (11, 11', 11''), une unité de conversion (12, 12', 12'') et une antenne secondaire (13, 13', 13") ; dans lequel l'unité d'évaluation (20) comprend une antenne primaire (23) ;
ladite machine-outil (3) étant conçue pour usiner une pièce (2) au cours d'une pluralité d'étapes du processus à l'aide d'une pluralité d'outils (33, 33', 33") successivement selon une séquence chronologique est dans ce but, un outil parmi la pluralité d'outils (33, 33', 33") est positionné sur la pièce (2) à chaque étape du processus, dans lequel une unité de mesure parmi la pluralité d'unités de mesure (10, 10', 10") est associée à chaque outil (33, 33', 33'') ;
ladite machine-outil (3) étant un tour à tourelle comprenant une tourelle (30), laquelle tourelle (30) est rotative autour d'un axe longitudinal (Z) ; dans lequel une pluralité de porte-outils (31, 31', 31'') est disposée sur la tourelle (30) ; dans lequel chaque porte-outil (31, 31', 31") reçoit un outil (33, 33', 33'') ; dans lequel les porte-outils (31, 31', 31") sont rotatifs avec la tourelle (30) autour de l'axe de rotation (Z) ; dans lequel, par rotation de la tourelle (30) autour de l'axe de rotation (Z), lesdits outils (33, 33', 33") peuvent être positionnés sur la pièce (2) successivement selon une séquence chronologique ;
dans lequel, lors de l'étape du processus, les étapes de procédé suivantes sont exécutées :
par le positionnement (I) d'un outil (33, 33', 33") sur la pièce (2), l'unité de mesure (10, 10', 10") associée à l'outil (33, 33', 33") positionné est placée dans une position de mesure (15) pour mesurer la valeur de mesure (MG) ;
couplage automatique (II) de l'unité de mesure (10, 10', 10") positionnée à l'unité d'évaluation (20) par l'établissement d'une liaison de transmission entre l'antenne secondaire (13, 13', 13") et l'antenne primaire (23) ;
génération automatique (III) de signaux de mesure (MS) par le capteur (11, 11', 11'') de l'unité de mesure (10, 10', 10") positionnée sous l'action de la valeur de mesure (MG) ;
conversion automatique (IV) des signaux de mesure (MS) en données de mesure (MD) par l'unité de conversion (12, 12', 12") de l'unité de mesure (10, 10', 10") positionnée ; et
transmission automatique (V) des données de mesure (MD) par l'antenne secondaire (13, 13', 13") de l'unité de mesure (10, 10', 10'') positionnée vers l'antenne primaire (23).

2. Procédé de mesure d'une valeur de mesure (MG) lors d'une étape du processus d'un processus de fabrication, lequel processus de fabrication est mis en œuvre par une machine-outil (4) utilisant une chaîne de mesure (1) comprenant une pluralité d'unités de mesure (10, 10', 10") et une unité d'évaluation (20) ; dans lequel chacune des unités de mesure (10, 10', 10") comprend un capteur (11, 11', 11''), une unité de conversion (12, 12', 12'') et une antenne secondaire (13, 13', 13") ; dans lequel l'unité d'évaluation (20) comprend une antenne primaire (23) ;
ladite machine-outil (4) étant conçue pour usiner une pluralité de pièces (2, 2', 2'') au cours d'une étape du processus à l'aide d'un outil (43) successivement selon une séquence chronologique et dans ce but, chaque pièce (2, 2', 2") est positionnée sur l'outil (43) successivement selon une séquence chronologique ; dans lequel une unité de mesure parmi la pluralité d'unités de mesure (10, 10', 10") est associée à chaque pièce (2, 2', 2") ;
ladite machine-outil (4) étant un système de bridage à point zéro comprenant une unité de support (40) comportant une pluralité d'unités de bridage (41, 41', 41") ; dans lequel une unité de bridage parmi la pluralité d'unités de bridage (41, 41', 41") respectivement est fixée de manière interchangeable à l'unité de support (40) ; dans lequel chacune unité de bridage parmi la pluralité d'unités de bridage (41, 41', 41") reçoit une pièce (2, 2', 2") ; dans lequel les pièces (2, 2', 2") reçues par les unités de bridage (41, 41', 41") sont positionnées sur l'outil (43) de la machine-outil (4) successivement selon une séquence chronologique ;
dans lequel, lors de l'étape du processus, les étapes de procédé suivantes sont exécutées :
par le positionnement (I) d'une pièce (2, 2', 2") sur l'outil (43), l'unité de mesure (10, 10', 10'') associée à la pièce (2, 2', 2") positionnée est placée dans une position de mesure (15) pour mesurer la valeur de mesure (MG) ;
couplage automatique (II) de l'unité de mesure (10, 10', 10'') positionnée à l'unité d'évaluation (20) par l'établissement d'une liaison de transmission entre l'antenne secondaire (13, 13', 13'') et l'antenne primaire (23) ;
génération automatique (III) de signaux de mesure (MS) par le capteur (11, 11', 11'') de l'unité de mesure (10, 10', 10") positionnée sous l'action de la valeur de mesure (MG) ;
conversion automatique (IV) des signaux de mesure (MS) en données de mesure (MD) par l'unité de conversion (12, 12', 12'') de l'unité de mesure (10, 10', 10") positionnée ; et
transmission automatique (V) des données de mesure (MD) par l'antenne secondaire (13, 13', 13") de l'unité de mesure (10, 10', 10") positionnée vers l'antenne primaire (23).

3. Procédé de mesure d'une valeur de mesure (MG) lors d'une étape du processus d'un processus de fabrication, lequel processus de fabrication est mis en œuvre par une machine-outil (5) utilisant une chaîne de mesure (1) comprenant une pluralité d'unités de mesure (10, 10', 10'') et une unité d'évaluation (20) ; dans lequel chacune des unités de mesure (10, 10', 10") comprend un capteur (11, 11', 11''), une unité de conversion (12, 12', 12'') et une antenne secondaire (13, 13', 13") ; dans lequel l'unité d'évaluation (20) comprend une antenne primaire (23) ;
ladite machine-outil (5) étant conçue pour traiter une pièce (2) au cours d'une étape du processus à l'aide d'un d'une pluralité d'outils (53, 53', 53") et dans ce but, un outil parmi ladite pluralité d'outils (53, 53', 53") est positionné sur la pièce (2) ; dans lequel une unité de mesure parmi la pluralité d'unités de mesure (10, 10', 10") est associée à chaque outil (53, 53', 53") ;
ladite machine-outil (5) est un robot industriel comprenant un manipulateur (50) et une pluralité de têtes interchangeables (51, 51', 51'') ; dans lequel une tête interchangeable parmi la pluralité de têtes interchangeables (51, 51', 51") respectivement est fixée de manière interchangeable au manipulateur (50) ; dans lequel chacune tête interchangeable parmi la pluralité de têtes interchangeables (51, 51', 51") reçoit un outil (53, 53', 53") ;
dans lequel, lors de l'étape du processus, les étapes de procédé suivantes sont exécutées :
par le positionnement (I) d'un outil (53, 53', 53") sur la pièce (2) sur l'outil (43), l'unité de mesure (10, 10', 10") associée à l'outil (53, 53', 53") positionné est placée dans une position de mesure (15) pour mesurer la valeur de mesure (MG) ;
couplage automatique (II) de l'unité de mesure (10, 10', 10") positionnée à l'unité d'évaluation (20) par l'établissement d'une liaison de transmission entre l'antenne secondaire (13, 13', 13") et l'antenne primaire (23) ;
génération automatique (III) de signaux de mesure (MS) par le capteur (11, 11', 11'') de l'unité de mesure (10, 10', 10") positionnée sous l'action de la valeur de mesure (MG) ;
conversion automatique (IV) des signaux de mesure (MS) en données de mesure (MD) par l'unité de conversion (12, 12', 12") de l'unité de mesure (10, 10', 10") positionnée ; et
transmission automatique (V) des données de mesure (MD) par l'antenne secondaire (13, 13', 13") de l'unité de mesure (10, 10', 10") positionnée vers l'antenne primaire (23).

4. Système constitué d'une machine-outil (3) et d'une chaîne de mesure (1) comprenant une pluralité d'unités de mesure (10, 10', 10'') et une unité d'évaluation (20) pour la mise en œuvre du procédé selon la revendication 1,
dans lequel chacune des unités de mesure (10, 10', 10") comprend un capteur (11, 11', 11''), une unité de conversion (12, 12', 12") et une antenne secondaire (13, 13', 13") ; dans lequel l'unité d'évaluation (20) comprend une antenne primaire (23) ; ladite machine-outil (3) étant conçue pour usiner une pièce (2) au cours d'une pluralité d'étapes de processus à l'aide d'une pluralité d'outils (33, 33', 33'') successivement selon une séquence chronologique et dans ce but, un outil parmi la pluralité d'outils (33, 33', 33") est positionné sur la pièce (2) à chaque étape du processus, dans lequel une unité de mesure parmi la pluralité d'unités de mesure (10, 10', 10") est associée à chaque outil (33, 33', 33'') ;
ladite machine-outil (3) étant un tour à tourelle comprenant une tourelle (30), ladite tourelle (30) étant rotative autour d'un axe longitudinal (Z) ; dans lequel une pluralité de porte-outils (31, 31', 31'') est disposée sur la tourelle (30) ; dans lequel chaque porte-outil (31, 31', 31'') reçoit un outil (33, 33', 33'') ; dans lequel les porte-outils (31, 31', 31") sont rotatifs avec la tourelle (30) autour de l'axe de rotation (Z) ; dans lequel, par rotation de la tourelle (30) autour de l'axe de rotation (Z), lesdits outils (33, 33', 33'') peuvent être positionnés sur la pièce (2) successivement selon une séquence chronologique ;
dans lequel chacune des unités de mesure (10, 10', 10") positionnées dans la position de mesure (15) peut être couplée à l'unité d'évaluation (20) pour établir une liaison de transmission entre l'antenne secondaire (13, 13', 13") et l'antenne primaire (23, 23', 23'').

5. Système constitué d'une machine-outil (4) et d'une chaîne de mesure (1) comprenant une pluralité d'unités de mesure (10, 10', 10'') et une unité d'évaluation (20) pour la mise en œuvre du procédé selon la revendication 2,
dans lequel chacune des unités de mesure (10, 10', 10") comprend un capteur (11, 11', 11''), une unité de conversion (12, 12', 12") et une antenne secondaire (13, 13', 13'') ; dans lequel l'unité d'évaluation (20) comprend une antenne primaire (23) ; ladite machine-outil (4) étant conçue pour usiner une pluralité de pièces (2, 2', 2") au cours d'une étape du processus à l'aide d'un outil (43) successivement selon une séquence chronologique et dans ce but, chaque pièce (2, 2', 2'') est positionnée sur l'outil (43) successivement selon une séquence chronologique ; dans lequel une unité de mesure parmi la pluralité d'unités de mesure (10, 10', 10") est associée à chaque pièce (2, 2', 2") ;
ladite machine-outil (4) étant un système de bridage à point zéro comprenant une unité de support (40) comportant une pluralité d'unités de bridage (41, 41', 41") ; dans lequel une unité de bridage parmi la pluralité d'unités de bridage (41, 41', 41") respectivement est fixée de manière interchangeable à l'unité de support (40) ; dans lequel chacune unité de bridage parmi la pluralité d'unités de bridage (41, 41', 41'') reçoit une pièce (2, 2', 2") ; dans lequel les pièces (2, 2', 2") reçues par les unités de bridage (41, 41', 41") sont positionnées sur l'outil (43) de la machine-outil (4) successivement selon une séquence chronologique ;
dans lequel chacune des unités de mesure (10, 10', 10") positionnées dans la position de mesure (15) peut être couplée à l'unité d'évaluation (20) pour établir une liaison de transmission entre l'antenne secondaire (13, 13', 13") et l'antenne primaire (23, 23', 23'').

6. Système constitué d'une machine-outil (5) et d'une chaîne de mesure (1) comprenant une pluralité d'unités de mesure (10, 10', 10'') et une unité d'évaluation (20) pour la mise en œuvre du procédé selon la revendication 3,
dans lequel chacune des unités de mesure (10, 10', 10") comprend un capteur (11, 11', 11''), une unité de conversion (12, 12', 12") et une antenne secondaire (13, 13', 13'') ; dans lequel l'unité d'évaluation (20) comprend une antenne primaire (23) ; ladite machine-outil (5) étant conçue pour traiter une pièce (2) lors d'une étape du processus à l'aide d'un outil parmi une pluralité d'outils (53, 53', 53'') et dans ce but, un outil parmi la pluralité d'outils (53, 53', 53") est positionné sur la pièce (2) ; dans lequel une unité de mesure parmi la pluralité d'unités de mesure (10, 10', 10") est associée à chaque outil (53, 53', 53") ;
ladite machine-outil (5) étant un robot industriel comprenant un manipulateur (50) et une pluralité de têtes interchangeables (51, 51', 51") ; dans lequel une tête interchangeable parmi la pluralité de têtes interchangeables (51, 51', 51") respectivement est fixée de manière interchangeable au manipulateur (50) ; dans lequel chacune tête interchangeable parmi la pluralité de têtes interchangeables (51, 51', 51") reçoit un outil (53, 53', 53") ;
dans lequel chacune des unités de mesure (10, 10', 10") positionnées dans la position de mesure (15) peut être couplée à l'unité d'évaluation (20) pour établir une liaison de transmission entre l'antenne secondaire (13, 13', 13") et l'antenne primaire (23, 23', 23'').

7. Système selon l'une quelconque des revendications 4 à 6, **caractérisé en ce que** l'antenne primaire (23) est conçue pour générer un champ électromagnétique alternatif (EW) et pour transmettre ledit champ électromagnétique alternatif (EW) ; **en ce qu'**une portée du champ électromagnétique alternatif (EW) est limitée de telle sorte que seules les unités de mesure (10, 10', 10") qui sont entièrement positionnées dans la position de mesure (15) sont capables de recevoir le champ électromagnétique alternatif (EW).

8. Système selon la revendication 7, **caractérisé en ce que** l'antenne secondaire (13, 13', 13") est conçue pour recevoir le champ électromagnétique alternatif (EW) ; **en ce que**, dès que et aussi longtemps que l'antenne secondaire (13, 13', 13") reçoit le champ électromagnétique alternatif (EW), l'unité de mesure (10, 10', 10'') est alimentée en énergie électrique ; et **en ce que** l'unité de mesure (10, 10', 10'') est alimentée en énergie électrique suffisante pour le fonctionnement de l'unité de mesure (10, 10', 10") dans un temps d'état de fonctionnement (BT) de 100ms, de préférence dans un temps d'état de fonctionnement (BT) de 20ms.

9. Système selon la revendication 8, **caractérisé en ce que,** lorsque l'unité de mesure (10, 10', 10'') atteint son état de fonctionnement, l'antenne secondaire (13, 13', 13") est conçue pour établir la liaison de transmission avec l'antenne primaire (23) en transmettant à l'antenne primaire (23) un numéro d'identification (ID) identifiant de manière univoque l'unité de mesure (10, 10', 10") ; **en ce que** l'antenne primaire (23) est conçue pour recevoir le numéro d'identification (ID) et pour le transmettre à l'unité d'évaluation (20) ; et **en ce que** l'unité d'évaluation (20) est conçue pour identifier l'unité de mesure (10, 10', 10'') sur la base du numéro d'identification (ID) reçu et transmis.

10. Système selon l'une quelconque des revendications 4 à 6, **caractérisé en ce que** l'unité de conversion (12, 12', 12") et l'antenne secondaire (13, 13', 13'') sont disposées dans un boîtier secondaire (17, 17', 17'') de la machine-outil (3, 4, 5) ; **en ce que** l'antenne primaire (23) est disposée dans un boîtier primaire (27) de la machine-outil (3, 4, 5) ; et **en ce que** le boîtier secondaire (17, 17', 17") et le boîtier primaire (27) sont mobiles l'un par rapport à l'autre.

11. Système selon la revendication 10, **caractérisé en ce que,** lorsqu'une unité de mesure (10, 10', 10'') est positionnée dans la position de mesure (15), le boîtier secondaire (17, 17', 17") de l'unité de mesure (10, 10', 10'') positionnée dans la position de mesure (15) est positionné à une distance de transmission (25) par rapport au boîtier primaire (27).

12. Système selon la revendication 11, **caractérisé en ce que** l'antenne primaire (23) est conçue pour générer un champ électromagnétique alternatif (EW) ; et **en ce que** la distance de transmission (25) entre le boîtier secondaire (17, 17', 17") de l'unité de mesure (10, 10', 10") positionnée dans la position de mesure (15) et le boîtier primaire (27) est égale à la portée du champ électromagnétique alternatif (EW).

13. Système selon l'une quelconque des revendications 4 à 12, **caractérisé en ce que** le capteur (11, 11', 11'') est un capteur piézoélectrique comprenant un matériau piézoélectrique ; **en ce que** la valeur de mesure (MG) agit sur le matériau piézoélectrique comme charge de traction et/ou de compression et, sous l'action de la valeur de mesure (MG), le matériau piézoélectrique génère des signaux de mesure (MS) sous forme de charges électriques ; **en ce que** l'unité de conversion (12, 12', 12'') comprend un amplificateur de charge, lequel amplificateur de charge est conçu pour amplifier la charge électrique du capteur piézoélectrique et pour la convertir en une tension électrique ; **en ce que** l'unité de conversion (12, 12', 12'') est conçue pour numériser la tension électrique en données de mesure (MD) ; **en ce que** le capteur piézoélectrique est conçu pour mesurer la valeur de mesure (MG) avec une résolution de mesure dynamique élevée allant jusqu'à 35 kHz ; et **en ce que** l'antenne secondaire (13, 13', 13") est conçue pour transmettre les données de mesure (MD) à l'antenne primaire (23) à un débit de transmission (SR) allant jusqu'à 424 kbit/s.

14. Système selon l'une quelconque des revendications 4 à 12, **caractérisé en ce que** le capteur (11, 11', 11'') est un capteur piézoélectrique comprenant un matériau piézoélectrique ; **en ce que** la valeur de mesure (MG) agit sur le matériau piézoélectrique comme charge de traction et/ou de compression et, sous l'action de la valeur de mesure (MG), le matériau piézoélectrique génère des signaux de mesure (MS) sous forme de charge électrique ; **en ce que** l'unité de conversion (12, 12', 12") comprend un amplificateur de charge, lequel amplificateur de charge est conçu pour amplifier la charge électrique du capteur piézoélectrique et pour la convertir en une tension électrique ; **en ce que** l'unité de conversion (12, 12', 12'') est conçue pour numériser la tension électrique en données de mesure (MD) ; **en ce que** l'unité de conversion (12, 12', 12'') est conçue pour générer des données d'unité (ED) indiquant l'unité de la valeur de mesure (MG) pour laquelle l'unité de conversion (12, 12', 12") a converti et numérisé des signaux de mesure (MS) en données de mesure (MD) ; **en ce que** l'unité de conversion (12, 12', 12") est conçue pour lire des données d'étalonnage (KD) du capteur (11, 11', 11'') à partir d'une unité de mémoire de l'unité de mesure (10, 10', 10'') ; **en ce que** l'unité de conversion (12, 12', 12") est conçue pour lire des données de numéro de série (SD) de l'unité de conversion (12, 12', 12") à partir de la mémoire de données de l'unité de mesure (10, 10', 10") ; et **en ce que** l'antenne secondaire (13, 13', 13") est conçue pour transmettre les données d'unité (ED), les données d'étalonnage (KD) et les données de numéro de série (SD) conjointement avec les données de mesure (MD) à l'antenne primaire (23).
